# EUROPEAN PATENT APPLICATION

(11) **EP 4 637 215 A1**
(43) Date of publication of application: **22.10.2025**
(21) Application number: 22969032.6
(22) Date of filing: 23.12.2022
(51) Int. Cl.: H04W 48/18, H04W 36/36

(54) **CELL INFORMATION INDICATION METHOD AND APPARATUS, DEVICE, MEDIUM, AND PROGRAM PRODUCT**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); LIN, Xue, Dongguan, Guangdong 523860 (CN); WANG, Shukun, Dongguan, Guangdong 523860 (CN)
(74) Representative: RGTH
(86) International application number: PCT/CN2022/141636
(87) International publication number: WO 2024/130745

(57) **Abstract**

The present application relates to the field of communications, and discloses a cell information indication method and apparatus, a device, a medium, and a program product. The method is executed by a terminal, and comprises: receiving cell information indicated by a network device; and executing a first behavior on the basis of the cell information. According to the method for receiving, by the terminal, cell information indicated by a network device and executing a first behavior on the basis of the cell information, the cell information is dynamically indicated, such that the terminal can continuously obtain the cell information, so as to flexibly select the first behavior to be executed.

## Description

### TECHNICAL FIELD

Embodiments of the present application relate to the field of communications, and more particularly, to an indication method of cell information, an apparatus, a device, a medium, and a program product.

### BACKGROUND

A 5th generation new radio (5G NR) system supports a handover procedure of terminals. When a terminal that is using network services moves from a source cell to a target cell, in order to ensure communication continuity and quality of service, the 5G NR system will transfer a communication link between the terminal and the source cell to the target cell, that is, the handover procedure is performed.

In related art, the terminal performs a handover procedure from the source cell to a candidate cell according to candidate cell information pre-configured by the system.

However, during continuous handover procedures, the pre-configured candidate cell information is no longer applicable, and therefore, an indication method of cell information is needed.

### SUMMARY

The present application provides an indication method of cell information, an apparatus, a device, a medium and a program product. The technical solutions at least include following.

According to one aspect of embodiments of the present application, an indication method of cell information is provided. The method is performed by a terminal and includes:
receiving cell information indicated by a network device; and
performing a first behavior based on the cell information.

According to one aspect of the embodiments of the present application, an indication method of cell information is provided. The method is performed by a network device and includes:
indicating cell information to a terminal, where the cell information is used for assisting the terminal in performing a first behavior.

According to another aspect of the embodiments of the present application, an indication apparatus of cell information is provided. The apparatus includes:
a receiving module, configured to receive cell information indicated by a network device; and
an execution module, configured to perform a first behavior based on the cell information.

According to another aspect of the embodiments of the present application, an indication apparatus of cell information is provided. The apparatus includes:
a transmitting module, configured to indicate cell information to a terminal, where the cell information is used for assisting the terminal in performing a first behavior.

According to another aspect of the embodiments of the present application, a communication device (terminal or network device) is provided. The communication device includes:
a processor;
a transceiver connected to the processor; and
a memory configured to store executable instructions of the processor;
where the processor is configured to load and execute executable instructions, to implement the indication methods of cell information in various aspects described above.

According to another aspect of the embodiments of the present application, a computer-readable storage medium is provided. The computer-readable storage medium has at least one instruction, at least one program, a code set or instruction set stored therein, and the at least one instruction, at least one program, the code set or instruction set is loaded and executed by a processor to implement the indication methods of cell information in various aspects described above.

According to another aspect of an embodiment of the present application, a computer program product (or computer program) is provided. The computer program product (or computer program) includes computer instructions, and the computer instructions are stored in a computer-readable storage medium. A processor of a computer device reads the computer instructions from the computer-readable storage medium, and the processor executes the computer instructions, to enable the computer device to perform the indication methods of cell information in various aspects described above.

The technical solutions provided by the embodiments of the present application may have the following beneficial effects.

In the present application, the cell information is dynamically indicated by the method in which the terminal receives the cell information indicated by the network device and performs the first behavior based on the cell information, so that the terminal may obtain the cell information during the cell handover procedure, thereby flexibly selecting the first behavior to be performed.

### BRIEF DESCRIPTION OF THE DRAWINGS

In order to illustrate the technical solutions in the embodiments of the present application more clearly, drawings required in the description of the embodiments will be briefly introduced below. It is apparent that the drawings in the following description are merely some embodiments of the present application. For those of ordinary skill in the art, other drawings can also be obtained according to these drawings without creative effort.
FIG. 1 illustrates a schematic diagram of a data transmission system provided according to an exemplary embodiment of the present application.
FIG. 2 illustrates a flowchart of a cell handover method provided according to the related art.
FIG. 3 illustrates a schematic diagram of a centralized unit-distributed unit separation architecture provided according to the related art.
FIG. 4 illustrates a schematic diagram of a network architecture provided according to the related art.
FIG. 5 illustrates a flowchart of a cell handover method provided according to the related art.
FIG. 6 illustrates a flowchart of a cell handover method provided according to the related art.
FIG. 7 illustrates a flowchart of an indication method of cell information provided according to an exemplary embodiment of the present application.
FIG. 8 illustrates a flowchart of an indication method of cell information provided according to an exemplary embodiment of the present application.
FIG. 9 illustrates a schematic diagram of an indication method of cell information provided according to an exemplary embodiment of the present application.
FIG. 10 illustrates a schematic diagram of an indication method of cell information provided according to an exemplary embodiment of the present application.
FIG. 11 illustrates a block diagram of an indication apparatus of cell information provided according to an exemplary embodiment of the present application.
FIG. 12 illustrates a block diagram of an indication apparatus of cell information provided according to an exemplary embodiment of the present application.
FIG. 13 illustrates a structural schematic diagram of a communication device provided according to an exemplary embodiment of the present application.

### DETAILED DESCRIPTION

In order to make objectives, technical solutions and advantages of the present application more clearly, implementations of the present application will be further described in detail below with reference to the drawings.

Exemplary embodiments, examples of which are illustrated in the drawings, will be described in detail here. When the following description refers to the drawings, the same numerals in different drawings represent the same or similar elements unless otherwise indicated. The implementations described in the following exemplary embodiments do not represent all implementations consistent with the present application. Rather, they are merely examples of apparatus and methods consistent with some aspects of the present application as recited in appended claims.

The terms used in the present application are merely for the purpose of describing particular embodiments, and are not intended to limit the present application. As used in the present application and the appended claims, the singular forms of "a/an" "the" and "the said" are also intended to include the plural form, unless context clearly indicates otherwise. It should also be understood that the term "and/or" as used herein refers to and includes any or all possible combinations of one or more associated listed items.

It should be noted that user information (including but not limited to user device information, user personal information or the like) and data (including but not limited to data for analysis, stored data, displayed data or the like) involved in the present application are all information and data authorized by users or fully authorized by all parties, and the collection, use and processing of relevant data need to comply with relevant laws, regulations and standards of relevant countries and regions.

It should be understood that although terms first, second or the like may be used in the present application to describe various types of information, and such information should not be limited to these terms. These terms are merely used to distinguish the same type of information from each other. For example, without departing from the scope of the present application, a first parameter may also be referred to as a second parameter, and similarly, a second parameter may also be referred to as a first parameter. Depending on the context, the word "if' as used herein may be interpreted as "when" or "where" or "in response to determining".

Some key terms in the present application are briefly introduced below.

**Xn interface:** a network interface between next generation radio access network (NG-RAN) nodes.

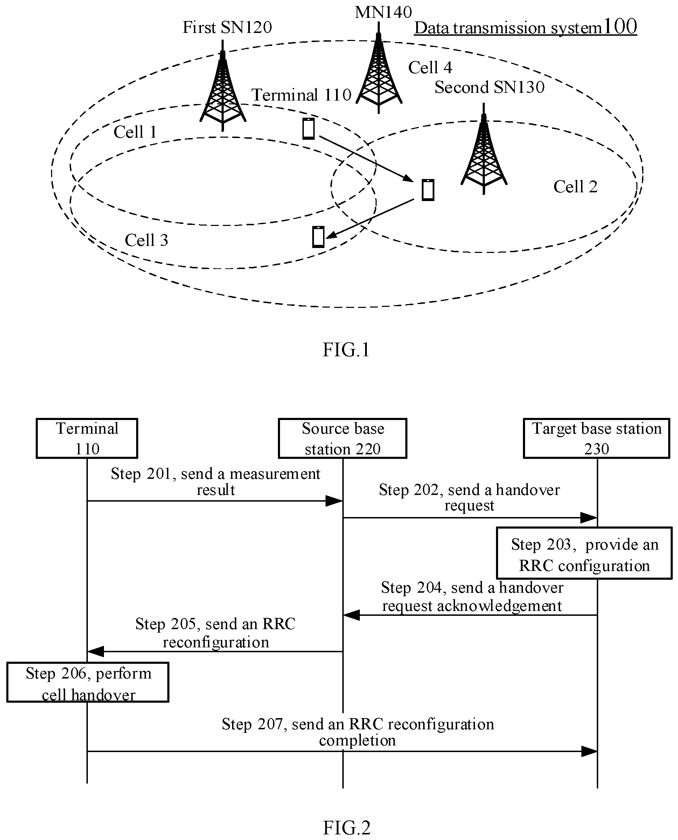

FIG. 1 illustrates a schematic diagram of a data transmission system 100 provided according to an exemplary embodiment of the present application. The data transmission system 100 includes: a terminal 110, a first secondary node (SN) 120, a second SN 130 and a master node (MN) 140. Here, the first SN 120 manages Cell 1 and Cell 3, the second SN 130 manages Cell 2, and the MN 140 manages Cell 4.

The terminal 110 may be referred to user equipment (UE), an access terminal, a subscriber unit, a subscriber station, a mobile station, a mobile station, a remote station, a remote terminal, a mobile device, a wireless communication device, a user agent or a user apparatus. Optionally, the terminal 110 may also be a cellular phone, a cordless phone, a session initiation protocol (SIP) phone, a wireless local loop (WLL) station, a personal digital assistant (PDA), a handheld device with wireless communication functions, a computing device or other processing device connected to a wireless modem, a vehicle-mounted device, a wearable device, a terminal device in a 5th generation system (5GS) or a terminal device in a future evolved public land mobile network (PLMN), or the like, and the embodiments of the present application are not limited thereto. For convenience of description, the above-mentioned devices are collectively referred to as terminals. In the present application, "terminal" and "UE" are often used interchangeably, but those skilled in the art may understand their meanings.

Exemplarily, as illustrate in FIG. 1, Cell 4 is a primary cell (Pcell) of the terminal 110, and Cell 1 is a primary secondary cell (PScell) of the terminal 110. The terminal 110 moves from Cell 1 to Cell 2, and then moves from Cell 2 to Cell 3. In some scenarios, the terminal 110 reports measurement results of cell signals, and the secondary node instructs the terminal 110 to perform a PScell change based on the measurement results. For example, when a signal measurement result of Cell 2 is better than that of Cell 1, the secondary node instructs the terminal 110 to change the PScell from Cell 1 to Cell 2.

In some scenarios, the SN pre-configures change conditions of each candidate PScell to the terminal 110. When the measurement result satisfies the change condition, the terminal 110 performs the PScell change on its own. For example, when the signal measurement result of Cell 2 is 10% higher than the signal measurement result of Cell 1, the terminal 110 changes the PScell from Cell 1 to Cell 2.

The 5G NR system supports a handover procedure of terminals. When a terminal that is using network services moves from a source cell to a target cell, in order to ensure communication continuity and quality of service, the 5G NR system will transfer a communication link between the terminal and the source cell to the target cell, that is, the handover procedure is performed.

### Traditional handover procedure

FIG. 2 illustrates a flowchart of a cell handover method provided according to the related art, and the method includes the following.

**Step 201:** a terminal 110 sends a measurement result.

The terminal 110 moves from A Cell managed by a source base station 220 to B Cell managed by a target base station 230, and the terminal 110 sends the measurement result of a cell signal to the source base station 220.

**Step 202:** the source base station 220 sends a handover request.

The source base station 220 triggers a handover based on the measurement result of the cell signal reported by the terminal 110, and sends the handover request to the target base station 230 via an Xn interface.

**Step 203:** the target base station 230 provides a radio resource control (RRC) configuration.

The target base station 230 receives the handover request from the source base station 220 and provides the RRC configuration of the target cell (that is, B Cell). The RRC configuration, as part of a handover request acknowledgement, is used for feedback to the source base station 220.

**Step 204:** the target base station 230 sends the handover request acknowledgement.

The target base station 230 sends the handover request acknowledgement to the source base station 220, in which the handover request acknowledgement includes the RRC configuration of B Cell.

**Step 205:** the source base station 220 sends an RRC reconfiguration.

The source base station 220 sends a handover command to the terminal 110, where the handover command includes at least one of: the RRC reconfiguration or the RRC configuration of B Cell. The RRC reconfiguration is used to instruct the terminal 110 to initiate the handover procedure, and the RRC configuration of B Cell is used to access B Cell.

**Step 206:** the terminal 110 performs cell handover.

The terminal 110 performs a cell handover operation based on the handover command transmitted by the source base station 220 and accesses the target cell (that is, B Cell). After the terminal 110 receives the handover command, main behaviors of a packet data convergence protocol (PDCP) layer, radio link control (RLC) layer and media access control (MAC) layer are shown in Table 1.

**Table 1**

| Protocol layer | Handover requiring security update | Handover without requiring security update |
|---|---|---|
| PDCP layer | Re-establishment | PDCP layer data recovery |
| RLC layer | Re-establishment | Re-establishment |
| MAC layer | Reset | Reset |

Here, the security update includes updating a key, adding an integrity protection algorithm or the like, which are explicitly indicated in the RRC reconfiguration;
whether to perform PDCP layer re-establishment, PDCP layer data recovery or RLC re-establishment will be explicitly indicated in the RRC reconfiguration; and
the PDCP layer is mainly responsible for performing encryption/decryption and integrity protection at the access stratum (AS) on data.

**Step 207:** the terminal 110 sends an RRC reconfiguration completion.

After the terminal 110 accesses the target cell, the terminal 110 sends the RRC reconfiguration completion to the target base station 230, indicating that the cell handover is completed.

The master device of the base station includes a base band unit (BBU) and an active antenna unit (AAU). The main function of the BBU is to be responsible for baseband signal processing, and the main function of the AAU is to convert baseband digital signals into analog signals, modulated the analog signals into high-frequency radio frequency signals, and then amplified power by an amplifier unit to transmit through antennas finally.

In order to enhance information interactions between various sites and realize cooperative communication, a centralized unit-distributed unit (CU-DU) separation architecture is introduced.

### Mobility management under CU-DU separation architecture

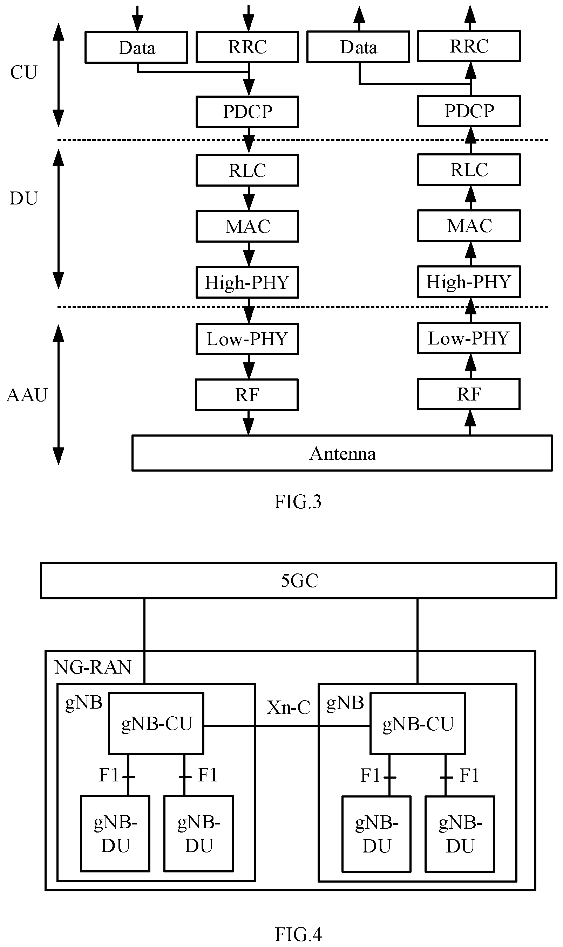

FIG. 3 illustrates a schematic diagram of a centralized unit-distributed unit separation architecture provided according to the related art.

The division of CU and DU is performed according to real-time requirements of different protocol layers. Based on this principle, a lower physical layer (Low-PHY)in the original BBU is sinked into the AAU for processing, a high physical layer (High-PHY), MAC layer and RLC layer with high real-time requirements are placed in the DU for processing, and a PDCP layer and RRC layer with low real-time requirements are placed in the CU for processing. That is, as illustrated in FIG. 3, the CU includes at least one of: an RRC layer, a PDCP layer or a data layer; the DU includes at least one of: an RLC layer, a MAC layer or a high physical layer; and the AAU includes at least one of: a lower physical layer, a radio frequency (RF) layer or an antenna.

The CU-DU separation architecture is beneficial to realizing sharing of baseband resources, slicing and cloudification of wireless access, and meeting site coordination issues under complex 5G networking situations.

FIG. 4 illustrates a schematic diagram of a network architecture provided according to the related art, including a next generation-radio access network (NG-RAN) and a 5G core network (5GC), where the NG-RAN represents a 5G access network, including one or more gNodeBs (gNBs), and data or signaling interactions between multiple gNBs are performed via an Xn-Control plane (Xn-C) interface.

Each gNB includes at least one of: a gNB-CU or gNB-DU(s). One gNB-CU may be connected to one or more gNB-DUs, but one gNB-DU may only be connected to one gNB-CU. Data or signaling interactions between the gNB-CU and the gNB-DU are performed via an F1 interface.

Under the CU-DU separation architecture, mobility management is divided into:
cell handover within an intra-CU-inter-DU range; and
cell handover within an intra-CU-intra-DU range.

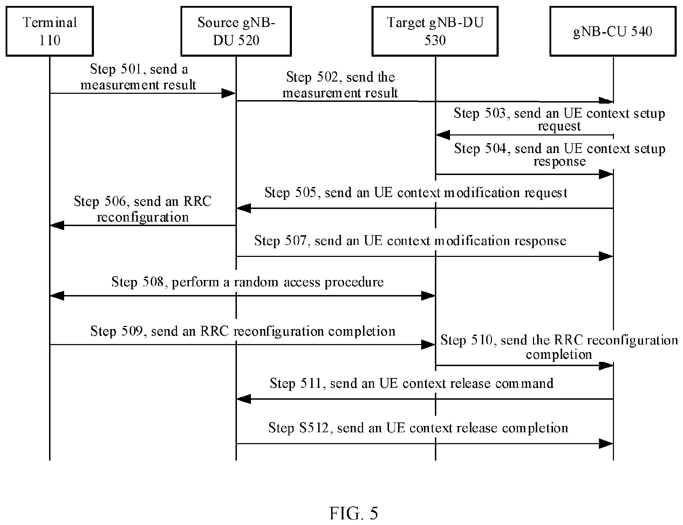

(1) For the cell handover within the intra-CU-inter-DU range, that is, the target cell and the source cell belong to different DUs. As illustrated in FIG. 5, FIG. 5 illustrates a flowchart of a cell handover provided according to the related art, which includes the following.

**Step 501:** a terminal 110 sends a measurement result.

The terminal 110 moves from A Cell managed by a source base station to B Cell managed by a target base station, and the terminal 110 sends the measurement result of a cell signals to a source gNB-DU 520.

**Step 502:** the source gNB-DU 520 sends the measurement result.

The source gNB-DU 520 sends the measurement result of the cell signal reported by the terminal 110 to a gNB-CU 540.

**Step 503:** the gNB-CU540 sends an UE context setup request.

The gNB-CU540 performs a handover decision, determines that the target cell is a cell belonging to a different DU from the source cell, and sends the UE context setup request to the target gNB-DU530 for creating a terminal context and setting one or more bearers.

**Step 504:** the target gNB-DU530 sends an UE context setup response.

After receiving the UE context setup request, the target gNB-DU 530 agrees to create the terminal context and sends the UE context setup response to the gNB-CU 540.

**Step 505:** the gNB-CU 540 sends an UE context modification request.

The gNB-CU 540 sends a handover command to the source gNB-DU 520, and the handover command includes at least one of: an RRC reconfiguration or the UE context modification request. The RRC reconfiguration is used to instruct the terminal 110 to initiate the handover procedure, and the UE context modification request is used to instruct the source gNB-DU 520 to perform modification.

**Step 506:** the source gNB-DU 520 sends an RRC reconfiguration.

The source gNB-DU 520 sends the RRC reconfiguration to the terminal 110 for instructing the terminal 110 to initiate the handover procedure.

**Step 507:** the source gNB-DU 520 sends an UE context modification response.

The source gNB-DU 520 sends the UE context modification response to the gNB-CU 540 to report the modified UE context.

**Step 508:** the terminal 110 performs a random access procedure.

The terminal 110 establishes a connection with the target gNB-DU 530 and achieves uplink synchronization by performing the random access procedure.

**Step 509:** the terminal 110 sends an RRC reconfiguration completion.

The terminal 110 sends the RRC reconfiguration completion to the target gNB-DU 530 to indicate that the cell handover is completed.

**Step 510:** the target gNB-DU 530 sends the RRC reconfiguration completion.

The target gNB-DU 530 sends the RRC reconfiguration completion to the gNB-CU 540 to indicate that the cell handover is completed.

**Step 511:** the gNB-CU540 sends an UE context release command.

The gNB-CU 540 sends the UE context release command to the source gNB-DU 520 to request the source gNB-DU520 to release the UE context.

**Step 512:** the source gNB-DU 520 sends an UE context release completion.

The source gNB-DU 520 sends the UE context release completion to the gNB-CU 540, and the UE context release completion is a successful response message replied to the gNB-CU 540.

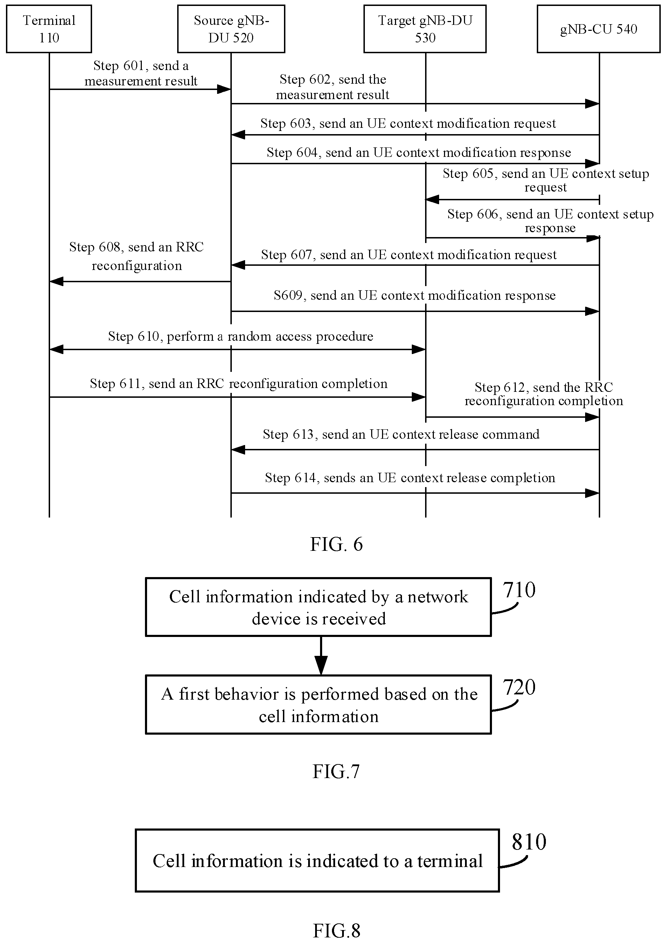

(2) For the cell handover within the intra-CU-intra-DU range, that is, the target cell and the source cell belong to the same DU. As illustrated in FIG. 6, FIG. 6 illustrates a flowchart of a cell handover provided according to the related art, which includes the following.

**Step 601:** a terminal 110 sends a measurement result.

The terminal 110 moves from A Cell managed by a source base station to B Cell managed by a target base station, and the terminal 110 sends the measurement result of a cell signal to a source gNB-DU 520.

**Step 602:** the source gNB-DU 520 sends the measurement result.

The source gNB-DU 520 sends the measurement result of the cell signal reported by the terminal 110 to a gNB-CU 540.

**Step 603:** the gNB-CU 540 sends an UE context modification request.

The gNB-CU 540 sends the UE context modification request to the source gNB-DU 520, where the UE context modification request is used to instruct the source gNB-DU 520 to update the UE context.

**Step 604:** the source gNB-DU 520 sends an UE context modification response.

The source gNB-DU 520 sends the UE context modification response to the gNB-CU 540 to report the updated UE context.

Steps 605 to 614 are the same as the above steps 503 to 512 and will not be repeated here.

### SN change under dual connectivity (DC) scenario

Under a DC scenario, an SN may be changed. Similar to the handover, key update is not required to perform for an SN change within intra SN. For a scenario of an SN change within inter SN, the key needs to be updated.

### Handover of MBS service

For the multicast service, a network side serves a group of UEs. After one UE within the group performs cell handover, the multicast service will not be restarted due to the one UE within the group. Therefore, for the bearer associated with the multicast service, the UE needs to know current transmission status information of the target cell after the cell handover.

### Layer 1/layer 2 triggered mobility (LTM) management

The handover procedure in the related art is triggered by layer 3 (L3) signaling (RRC reconfiguration). In order to further reduce the latency of the L3 handover procedure, the handover procedure based on Layer 1/layer 2 (L1/L2) measurement/signaling will be supported in the related art. The cell handover procedure based on the L1/L2 measurement/signaling includes the following steps:
1. receiving candidate cell configurations: the UE receives multiple pieces of candidate cell configuration information transmitted by a network side;
2. measuring and measurement result reporting: the UE performs L1 measurement on all or part of the candidate cells to obtain beam/cell-level measurement results; and the UE reports the measurement result to a current serving cell according to the configuration; and
3. receiving, by the UE, L1/L2 signaling transmitted by the network side, to switch to the target cell. The L1/L2 signaling is used to indicate one of multiple candidate cells as the target cell for handover. In addition, the L1/L2 signaling may also indicate/activate a transmission configuration indication state for the target cell to provide the UE with information about beams operating in the target cell.

In the related art, in the communication scenario of FIG. 1, since Cell 1 and Cell 2 belong to different SNs (inter SN), when the terminal 110 changes the PScell from Cell 1 to Cell 2, key update is required to be performed. The SN indicates information for updating the key (including a secondary key counter sk_counter) through preconfigured candidate cell configuration information, and the updated key is generated jointly by the secondary key counter sk_counter and a master key transmitted by the master node 140, used for encrypting data transmission. Since Cell 1 and Cell 3 belong to the same SN (intra SN), when the terminal 110 changes the PScell from Cell 1 to Cell 3, the terminal 110 does not need to perform key update.

However, in the continuous cell handover/change/addition scenario, when the PScell of the terminal 110 is Cell 1, the SN preconfigures candidate cell configurations of Cell 2 and Cell 3. Since Cell 1 and Cell 2 belong to different SNs (inter SN), the sk_counter is configured in the candidate cell configuration of Cell 2; and Cell 1 and Cell 3 belong to the same SN (intra SN), the sk_counter is not configured in the candidate cell configuration of Cell 3. In a case where the terminal 110 subsequently changes from Cell 1 to Cell 2 and then changes from Cell 2 to Cell 3, when the PScell is changed from Cell 1 to Cell 2 on its own, the terminal 110 may perform key update; however, when the PScell is changed from Cell 2 to Cell 3 on its own, key update cannot be performed, resulting in data not being transmitted normally.

In order to solve a series of problems similar to the above problems, the present application provides an indicating method of cell information.

FIG. 7 illustrates a flowchart of an indicating method of cell information provided according to an exemplary embodiment of the present application, in which the method is performed by a terminal and includes the following.

**Step 710:** cell information indicated by a network device is received.

The terminal receives the cell information indicated by the network device, where the cell information is relevant information used for assisting in cell handover/change/addition.

Here, the cell information includes at least one of:
- cell deployment information;
   cell deployment information related to cell handover/change/addition;
- secondary node deployment information;
   secondary node/secondary cell group/primary secondary cell deployment information related to cell handover/change/addition;
- key update information;
   information related to whether key update needs to be performed after cell handover/change/addition;
- protocol stack processing information;
   information related to whether protocol stack processing needs to be performed and a type of a protocol stack processing to be performed after cell handover/change/addition; or
- transmission status information of a current service;
   information related to how to set the transmission status information of the current service after cell handover/change/addition, where the current service may be a multicast service.

(1) The cell deployment information includes at least one of the following.

- A source cell and a target cell belonging to a same DU or different DUs.
   In some embodiments, the target cell corresponds to single-bit indication information. When a value of the indication information is 1, it represents that the source cell and the target cell belong to the same DU; and when the value of the indication information is 0, it represents that the source cell and the target cell belong to different DUs.
- The source cell and a candidate cell belonging to a same DU or different DUs.
   In some embodiments, each candidate cell corresponds to single-bit indication information. When a value of the indication information is 1, it represents that the source cell and the candidate cell belong to the same DU; and when the value of the indication information is 0, it represents that the source cell and the candidate cell belong to different DUs. When there are multiple candidate cells, a bitmap is used to indicate the multiple candidate cells. For example, a single bit in the bitmap is used to indicate whether each candidate cell belongs to the same DU as the source cell. When the value of the bitmap is 011, the order of the candidate cells corresponding to the three bits is candidate cell 1, candidate cell 2 and candidate cell 3, then the source cell and candidate cell 1 do not belong to the same DU, and the source cell, candidate cell 2 and candidate cell 3 belong to the same DU.
- A DU to which the candidate cell belongs.
   In some embodiments, the cell deployment information carries a DU identifier of a DU to which each candidate cell belongs.
- A DU to which the target cell belongs.
   In some embodiments, the cell deployment information carries a DU identifier of the DU to which the target cell belongs.
- First indication information, indicating that a current cell handover is an intra DU handover.
- Second indication information, indicating that a current cell handover is an inter DU handover.

In a scenario where the network device instructs the terminal to perform cell handover/change/addition, single-bit indication information may be used to indicate that the current cell handover is the intra DU handover or inter DU handover. When a value of the indication information is 1, it represents that the current cell handover is the intra DU handover; and when the value of the indication information is 0, it represents that the current cell handover is the inter DU handover.

In a scenario where the terminal performs cell handover/change/addition on its own, a bitmap may be used to indicate in advance that the cell handover from the source cell to any one of candidate cells is the intra DU handover or the inter DU handover. For example, a single bit in the bitmap is used to indicate that the cell handover from the source cell to any one of the candidate cells is the intra DU handover or the inter DU handover. When the value of the single bit is 1, it represents that the cell handover is the intra DU handover; and when the value of the single bit is 0, it represents that the cell handover is the inter DU handover. When the value of the bitmap is 011, the order of candidate cells corresponding to the three bits is candidate cell 1, candidate cell 2 and candidate cell 3, then the handover from the source cell to candidate cell 1 is the inter DU handover, and the handover from the source cell to candidate cell 2 or the handover from the source cell handover to candidate cell 3 is the intra DU handover.
- A cell group or cell group identifier corresponding to at least two candidate cells belonging to a same DU.
The cell deployment information carries the cell group or cell group identifier corresponding to the at least two candidate cells belonging to the same DU. For example, a cell group corresponding to candidate cell 1 and candidate cell 2 belonging to the first DU is a first cell group, and a cell group corresponding to candidate cell 3 and candidate cell 4 belonging to a second DU is the second cell group.

(2) The secondary node deployment information includes at least one of the following.
- A source primary secondary cell (PScell) and a target PScell belonging to a same SN or different SNs.
   For example, the target PScell corresponds to single-bit indication information. When a value of the indication information is 1, it represents that the source PScell and the target PScell belong to the same SN; and when the value of the indication information is 0, it represents that the source PScell and the target PScell belong to different SNs.
- The source PScell and a candidate PScell belonging to a same SN or different SNs.
   For example, each candidate PScell corresponds to single-bit indication information. When a value of the indication information is 1, it represents that the source PScell and the candidate PScell belong to the same SN; and when the value of the indication information is 0, it represents that the source PScell and the candidate PScell belong to different SNs. When there are multiple candidate PScells, a bitmap is used to indicate the multiple candidate cells. For example, a single bit in the bitmap is used to indicate whether each candidate cell belongs to the same DU as the source cell. When the value of the bitmap is 011, the order of the candidate cells corresponding to the three bits is candidate PScell 1, candidate PScell 2 and candidate PScell3, then the source PScell and candidate PScell 1 do not belong to the same SN, and the source PScell, candidate PScell 2 and candidate PScell 3 belong to the same SN.
- An SN to which the candidate PScell belongs.
   For example, the secondary node deployment information carries an SN identifier of an SN to which each candidate PScell belongs.
- An SN to which the target PScell belongs.
   For example, the secondary node deployment information carries an SN identifier of the SN to which the target PScell belongs.
- Third indication information, indicating that a current PScell change is an intra SN change.
- Fourth indication information, indicating that a current PScell change is an inter SN change.

In a scenario where the network device instructs the terminal to perform PScell change, single-bit indication information may be used to indicate that the current PScell change is the intra SN change or inter SN change. When a value of the indication information is 1, it represents that the current PScell change is the intra SN change; and when the value of the indication information is 0, it represents that the current PScell change is the inter SN change.

In a scenario where the terminal performs PScell change on its own, a bitmap may be used to indicate in advance that the change from the source PScell to any one of PScells is the intra SN change or inter SN change. For example, a single bit in the bitmap is used to indicate that the change from the source PScell to any one of PScells is the intra SN change or the inter SN change. When the value of the single bit is 1, it represents that the change from the source PScell to any one of PScells is the intra SN change; and when the value of the single bit is 0, it represents that the change from the source PScell to any one of PScells is the inter SN change. When the value of the bitmap is 011, the order of candidate PScells corresponding to the three bits is candidate PScell 1, candidate PScell 2 and candidate PScell 3, then the change from the source PScell to candidate PScell 1 is the inter SN change, and the change from the source PScell to candidate PScell 2 or the change from the source PScell to candidate PScell 3 is the intra SN change.
- A cell group or cell group identifier corresponding to at least two candidate PScells belonging to a same SN.
   In some embodiments, the secondary node deployment information carries the cell group or cell group identifier corresponding to the at least two candidate PScells belonging to the same SN. For example, a cell group corresponding to candidate PScell 1 and candidate PScell 2 belonging to a first SN is a first cell group, and a cell group corresponding to candidate PScell 3 and candidate PScell 4 belonging to a second SN is a second cell group.
- Secondary key counters (sk_counters) corresponding to at least two candidate PScells belonging to a same SN, where each sk_counter is used to update a key after change to the target PScell.

In some embodiments, the secondary node deployment information carries the sk_counters corresponding to the at least two candidate PScells belonging to the same SN. For example, the sk_counters corresponding to candidate PScell 1 and candidate PScell2 belonging to the first SN are sk_counter 1 and sk_counter 2, respectively.

It should be noted that the meanings represented by the above values of 0 or 1 may be interchanged to form different embodiments. The present embodiment does not limit the correspondence between the values of bits and the meanings of values.

(3) The protocol stack processing information includes at least one of the following.
- Whether protocol stack processing needs to be performed after handover to a target cell.
- A type of a protocol stack processing that needs to be performed after handover to the target cell.

Here, the type of the protocol stack processing includes at least one of: PDCP re-establishment, PDCP data recovery, RLC re-establishment, MAC reset, MAC partial reset, or clearing of a signalling radio bearer packet data convergence protocol service data unit (SRB PDCP SDU).

Under the scenario where the network device instructs the terminal to perform cell handover/change/addition, the protocol stack processing information is used to indicate whether protocol stack processing needs to be performed after handover to the target cell, and/or the type of the protocol stack processing that needs to be performed after handover to the target cell. For example, after the network device instructs the terminal to switch from the source cell to the target cell, the protocol stack processing information instructs to perform RLC re-establishment.

Under the scenario where the terminal performs cell handover/change/addition on its own, the protocol stack processing information is used to indicate whether protocol stack processing needs to be performed and/or the type of the protocol stack processing that needs to be performed, after the source cell is switched to each candidate cell. For example, the candidate cells include candidate cell 1 and candidate cell 2, the protocol stack processing information indicates that protocol stack processing does not need to be performed after the source cell is switched to the candidate cell 1, and indicates that RLC re-establishment is performed after the source cell is switched to the candidate cell 2.

Execution granularity of the protocol stack processing is at least one of:
- a single radio bearer (RB);
- a single UE;
- a single RB group;
- a single SRB;
- a single (user) data radio bearer (DRB);
- a single acknowledgement mode DRB (AM DRB); or
- a single un-acknowledgement Mode DRB (UM DRB).

(4) The transmission status information of the current service includes at least one of:
a PDCP sequence number (PDCP SN), indicating a sequence number of a PDCP SDU;
a PDCP hyper frame number (PDCP HFN), indicating a hyper frame number of a PDCP SDU;
a state variable RX_NEXT, indicating a next count (COUNT) value expected to be received by a receiving side;
a state variable RX_DELIV, indicating a COUNT value associated with a first PDCP SDU in a receive window that has not yet been delivered to upper layers; or
a target multicast radio bearer identity document (MRB ID), indicating a multicast radio bearer (MRB) associated with a multimedia broadcast service (MBS).

The PDCP HFN is used to indicate the number of times the PDCP SN overflows, for example, the length of the PDCP SN is 5 bits, when its value is increased by 1 from 31 to 32, the PDCP SN overflows to zero and the PDCP HFN becomes 1.

In some embodiments, the cell information is carried in a first information, and the first information includes at least one of:
- a handover command;
- candidate cell configuration information;
- a RRC message;
- a MAC control element (MAC CE); or
- downlink Control Information (DCI).

That is, the first information may be:
a) the handover command, such as a L1/L2 cell handover command or an SN change/addition command;
b) the candidate cell configuration information, such as candidate cell configuration information for LTM or SN/secondary cell group (SCG)/PScell configuration information in a scenario of selective activation of cell groups; or
c) the first information may also be a new piece of information, such as the RRC information, the MAC CE or the DCI.

In some embodiments, the above cell information is transmitted during each cell handover/change procedure, so that the UE may obtain dynamically updated or real-time cell information in time.

Step 720: a first behavior is performed based on the cell information.

The first behavior may be a behavior related to cell handover/change. The first behavior includes at least one of:
(1) key update of a target cell;
(2) key update of a secondary node or a secondary cell group or a primary secondary cell;
(3) setting of an initial state variable RX_DELIV of a PDCP entity corresponding to a target multicast radio bearer to a state variable RX_DELIV indicated in the cell information; or
(4) layer 2 reset;
where the layer 2 reset includes at least one of: PDCP re-establishment, PDCP data recovery, RLC re-establishment, MAC reset, MAC partial reset or clearing of an SRB PDCP SDU.

For (1) key update of the target cell.

In a case where the cell information indicates that the current cell handover is the inter DU handover, key update of the target cell is performed based on the cell information.

The step includes at least one or any one of:
- in a case where it is determined that a DU identifier corresponding to the source cell is different from a DU identifier corresponding to the target cell based on the cell information, key update of the target cell is performed. For example, the cell information carries the DU identifier of the target cell, and when the UE determines that the DU identifier corresponding to the source cell is different from the DU identifier corresponding to the target cell, the UE performs key update of the target cell;
- in a case where it is determined that the source cell and the target cell belong to different cell groups based on the cell information, key update of the target cell is performed. For example, the cell information carries a group identifier of a cell group to which the target cell belongs, and when the UE determines that a group identifier corresponding to the source cell and the group identifier corresponding to the target cell are different, the UE performs key update of the target cell; or
- in a case where the cell information indicates that key update is needed to be performed for handover from the source cell to the target cell, key update of the target cell is performed. For example, the cell information carries second indication information for indicating that the current cell handover is the inter DU handover, and the UE performs key update of the target cell.

For (2) key update of the secondary node or the secondary cell group or the primary secondary cell.

In a case where the cell information indicates that the current PScell change is the inter SN change, key update of the secondary node or the secondary cell group or the primary and secondary cell is performed based on the cell information.

The step includes at least one or any one of:
- in a case where it is determined that an SN identifier corresponding to the source PScell is different from an SN identifier corresponding to the target PScell based on the cell information, key update of the secondary node or the secondary cell group or the primary secondary cell is performed. For example, the cell information carries the SN identifier of the target PScell, and when the UE determines that the SN identifier corresponding to the source PScell is different from the SN identifier corresponding to the target PScell, key update of the secondary node or the secondary cell group or the primary secondary cell is performed;
- in a case where it is determined that the source PScell and the target PScell belong to different cell groups based on the cell information, key update of the secondary node or the secondary cell group or the primary secondary cells is performed. For example, the cell information carries a group identifier of a cell group to which the target PScell belongs, and when the UE determines that a group identifier corresponding to the source PScell is different from the group identifier corresponding to the target PScell, key update of the secondary node or the secondary cell group or the primary secondary cell is performed;
- in a case where it is determined that the source PScell and the target PScell are associated with different sk_counters based on the cell information, key update of the secondary node or the secondary cell group or the primary secondary cell is performed. For example, the cell information carries a group identifier of the sk_counter associated with the target PScell, and when the UE determines that a sk_counter associated with the source PScell and the sk_counter associated with the target PScell are different, key update of the secondary node or the secondary cell group or the primary secondary cell is performed; or
- in a case where the cell information indicates that key update is needed to be performed for handover from the source PScell to the target PScell, key update of the secondary node or the secondary cell group or the primary secondary cell is performed. For example, the cell information carries fourth indication information for indicating that the current PScell change is the inter SN change, and the UE performs key update of the secondary node or the secondary cell group or the primary secondary cell.

For (3) setting of the initial state variable RX_DELIV of the PDCP entity corresponding to the target multicast radio bearer to the state variable RX_DELIV indicated in the cell information.

After the terminal switches from the source cell to the target cell, initial transmission status information in the target cell is set to the transmission status information of the current service indicated in the cell information.

In a case where the cell information includes a state variable RX_DELIV, an initial state variable RX_DELIV of the PDCP entity corresponding to the target multicast radio bearer is set to the state variable RX_DELIV indicated in the cell information; or
in a case where the cell information includes a state variable RX_DELIV and the target MRB ID, an initial state variable RX_DELIV of the PDCP entity corresponding to the target multicast radio bearer is set to the state variable RX_DELIV indicated in the cell information.

In some embodiments, in a case where the cell information does not include the state variable RX_DELIV, the initial state variable RX_DELIV of the PDCP entity corresponding to the target multicast radio bearer remains unchanged.

In some embodiments, in a case where the cell information includes a PDCP SN, an initial PDCP SN of the PDCP entity corresponding to the target multicast radio bearer is set to the PDCP SN indicated in the cell information; or
in a case where the cell information includes a PDCP SN and the MRB ID, an initial PDCP SN of the PDCP entity corresponding to the target multicast radio bearer is set to the PDCP SN indicated in the cell information; or
in a case where the cell information does not include a PDCP SN, an initial PDCP SN of the PDCP entity corresponding to the target multicast radio bearer remains unchanged.

In some embodiments, in a case where the cell information includes a PDCP HFN, an initial PDCP HFN of the PDCP entity corresponding to the target multicast radio bearer is set to the PDCP HFN indicated in the cell information; or
in a case where the cell information includes a PDCP HFN and the MRB ID, an initial PDCP HFN of the PDCP entity corresponding to the target multicast radio bearer is set to the PDCP HFN indicated in the cell information; or
in a case where the cell information does not include a PDCP HFN, an initial PDCP HFN of the PDCP entity corresponding to the target multicast radio bearer remains unchanged.

In some embodiments, in a case where the cell information includes a state variable RX_NEXT, an initial state variable RX_NEXT of the PDCP entity corresponding to the target multicast radio bearer is set to the state variable RX_NEXT indicated in the cell information; or
in a case where the cell information includes a state variable RX_NEXT and the MRB ID, an initial state variable RX_NEXT of the PDCP entity corresponding to the target multicast radio bearer is set to the state variable RX_NEXT indicated in the cell information; or
in a case where the cell information does not include a state variable RX_NEXT, an initial state variable RX_NEXT of the PDCP entity corresponding to the target multicast radio bearer remains unchanged.

As another optional design idea, the cell information includes: multiple candidate cell configurations of a first candidate PScell, where each candidate cell configuration includes: a candidate cell index, a handover trigger condition and information for key update;
where handover trigger conditions in the multiple candidate cell configurations are the same, candidate cell indexes in different candidate cell configurations are different, and the information for key update includes: no need to update a key, or a sk_counter used for updating a key.

With reference to FIG. 1, assuming that the current PScell is Cell 1, the first candidate PScell is Cell 3, and three groups of candidate cell configurations are configured for Cell 3, which are shown in Table 2 below.

**Table 2**

| Candidate cell index | | Handover trigger condition | Information for key update | | Whether sk_counter is valid | |
|---|---|---|---|---|---|---|
| | 3-1 | Trigger condition 1 | | Sk_counter 1 | | Valid |
| | 3-2 | Trigger condition 2 | | Sk_counter 2 | | Valid |
| | 3-3 | Trigger condition 3 | | None | | |

Here, since Cell 3 is configured with three groups of candidate cell configurations, the UE may equivalently regard Cell 3 as three candidate PScells: Cell 3-1, Cell 3-2 and Cell 3-3. However, these three candidate PScells are essentially one cell and correspond to the same physical cell identifier (PCI).

The above operation that the first behavior is performed based on the cell information includes:
for the first candidate PScell, in a case where candidate cell configurations satisfying handover trigger conditions include at least two candidate cell configurations, selecting a first candidate cell configuration based on the at least two candidate cell configurations. For example, the handover trigger conditions corresponding to the above candidate cell indexes 3-1, 3-2 and 3-3 are all satisfied, and then, the first candidate cell configuration is selected from the three candidate cell configurations.

Here, the first candidate cell configuration is used for a key update procedure of the target PScell, where the target PScell is the first candidate PScell.

In some embodiments, selecting the first candidate cell configuration based on the at least two candidate cell configurations includes the following.
(1) The first candidate cell configuration is randomly selected from the at least two candidate cell configurations.
   Exemplarily, the first candidate PScell is Cell 3, the Cell 3 is configured with three groups of candidate cell configurations, and the corresponding candidate cell indexes are 3-1, 3-2 and 3-3, respectively. The corresponding candidate cell configuration with the candidate cell index of 3-1 is randomly selected as the first candidate cell configuration.
(2) Candidate cell configurations with valid sk_counters are determined from the at least two candidate cell configurations, and a first-sorted candidate cell configuration in the candidate cell configurations with valid sk_counters is taken as the first candidate cell configuration.

Optionally, the candidate cell configurations with valid sk_counters are sorted in one of the following sorting manners:
- sorting in descending order according to the candidate cell indexes;
- sorting in ascending order according to the candidate cell indexes;
- sorting in descending order according to the sk_counters; or
- sorting in ascending order according to the sk_counters.

Exemplarily, the first candidate PScell is Cell 3, and Cell 3 is configured with two groups of candidate cell configurations with valid sk_counters: candidate cell configuration 1 and candidate cell configuration 2. The candidate cell index corresponding to candidate cell configuration 1 is 3-1, and the candidate cell index corresponding to candidate cell configuration 2 is 3-2, which are sorted in ascending order according to the candidate cell indexes, in which the candidate cell index 3-1 corresponding to candidate cell configuration 1 is sorted in first place, and thus the candidate cell configuration 1 is taken as the first candidate cell configuration.

(3) Candidate cell configurations with unused sk_counters are determined from the at least two candidate cell configurations, and a first-sorted candidate cell configuration in the candidate cell configurations with unused sk_counters is taken as the first candidate cell configuration.

Exemplarily, the first candidate PScell is Cell 3, and Cell 3 is configured with two groups of candidate cell configurations with unused sk_counters: candidate cell configuration 1 and candidate cell configuration 2. The candidate cell index corresponding to candidate cell configuration 1 is 3-1, and the candidate cell index corresponding to candidate cell configuration 2 is 3-2, which are sorted in ascending order according to the candidate cell indexes, in which the candidate cell index 3-1 corresponding to candidate cell configuration 1 is sorted in first place, and thus the candidate cell configuration 1 is taken as the first candidate cell configuration.

In some embodiments, the terminal reports a candidate cell index in a selected candidate cell configuration to the MN.

Exemplarily, the terminal reports to the MN that the candidate cell index in the selected candidate cell configuration 1 is 3-1.

In some embodiments, in a case where a change from the source PScell to the target PScell is an inter SN change, a new key is derived based on a sk_counter in the first candidate cell configuration, and the sk_counter shall be invalidated or released; or
in a case where a change from the source PScell to the target PScell is an intra SN change, a sk_counter in the first candidate cell configuration is not applied to derive a new key, and the sk_counter is maintained to be valid.

Exemplarily, the source PScell belongs to the first SN, the target PScell belongs to the second SN, the sk_counter in the first candidate cell configuration is sk_counter1, the change from the source PScell to the target PScell belongs to the inter SN change, the new key is derived based on the sk_counter1, and the sk_counter 1 shall be invalidated or released.

In some embodiments, in a case where the first candidate cell configuration and a second candidate cell configuration are both associated with a same sk_counter, and a change from the source PScell to the first PScell is an inter SN change, a new key is derived based on a sk_counter in the first candidate cell configuration, and the sk_counter shall be invalidated or released;
where the first candidate cell configuration and the second candidate cell configuration are applied to an intra SN PScell change only, in a subsequent PScell change procedure.

That is, for a certain candidate PScell, if the handover in which the UE switches from the source PScell to the candidate PScell is the inter-SN handover, the UE derives a new key according to the configuration, and considers that the sk_counter in the candidate cell configuration is invalidated or releases the sk_counter in the configuration. If the handover in which the UE switches from the source PScell to the candidate PScell is the intra-SN handover, the UE does not apply the sk_counter in the candidate cell configuration and considers that the sk_counter is still valid. For a candidate cell in which the sk_counter in the candidate cell configuration is invalid or the sk_counter is not included in the candidate cell configuration, which is used for the intra-SN PScell change only; or the UE releases a candidate cell with used sk_counter; or it is considered that the candidate cell with used sk_counter is an invalid candidate configuration, and an evaluation on execution conditions of the cell is stopped.

Exemplarily, the first PScell includes the first candidate cell configuration and the second candidate cell configuration, the first candidate cell configuration is candidate cell configuration 1, the second candidate cell configuration is candidate cell configuration 2, both are associated with sk_counter1. The source PScell belongs to the first SN, the first PScell belongs to the second SN, and the change from the source PScell to the first PScell belongs to the inter SN change. In this case, the new key is derived based on sk_counter1, and the sk_counter 1 shall be invalidated or released.

To sum up, in the method provided in the present embodiment, the cell information is dynamically indicated by the method in which the terminal receives the cell information indicated by the network device and performs the first behavior based on the cell information, so that the terminal can continuously obtain the cell information, thereby performing the first behavior such as protocol stack processing and key update.

In the method provided in the present embodiment, by providing the multiple candidate cell configurations of the first candidate PScell, the first candidate cell configuration is selected when the handover trigger condition is met, so that the terminal avoids frequent reconfiguration or update of security information.

FIG. 8 illustrates a flowchart of an indicating method of cell information provided according to an exemplary embodiment of the present application. The method is performed by a network device and includes the following.

**Step 810:** cell information is indicated to a terminal.

The network device indicates the cell information to the terminal, where the cell information is used for assisting the terminal in performing a first behavior, and the cell information includes at least one of:
- cell deployment information;
- secondary node deployment information;
- key update information;
- protocol stack processing information; or
- transmission status information of a current service.

(1) The cell deployment information is used to indicate a relationship between a cell and a DU, and includes at least one of:
   - a source cell and a target cell belonging to a same DU or different DUs;
   - the source cell and a candidate cell belonging to a same DU or different DUs;
   - a DU to which the candidate cell belongs;
   - a DU to which the target cell belongs;
   - first indication information, indicating that a current cell handover is an intra DU handover;
   - second indication information, indicating that a current cell handover is an inter DU handover; or
   - a cell group or cell group identifier corresponding to at least two candidate cells belonging to a same DU.
(2) The secondary node deployment information is used to indicate a relationship between a primary secondary cell and an SN, and includes at least one of:
   - a source PScell and a target PScell belonging to a same SN or different SNs;
   - the source PScell and a candidate PScell belonging to a same SN or different SNs;
   - an SN to which the candidate PScell belongs;
   - an SN to which the target PScell belongs;
   - third indication information, indicating that a current PScell change is an intra SN change; optionally, in a case where there are multiple candidate PScells, a bitmap is used to indicate whether the current PScell change is an intra SN change or whether a key needs to be updated, when different candidate PScells are taken as target PScells.
   - fourth indication information, indicating that a current PScell change is an inter SN change; optionally, in a case where there are multiple candidate PScells, a bitmap is used to indicate whether the current PScell change is an inter SN change or whether a key needs to be updated, when different candidate PScells are taken as target PScells.
   - a cell group or cell group identifier corresponding to at least two candidate PScells belonging to a same SN; or
   - sk_counters corresponding to at least two candidate PScells belonging to a same SN, where each sk_counter is used to update s key after change to the target PScell.
(3) The protocol stack processing information is used to indicate the processing of the protocol stack, and includes at least one of:
   - whether protocol stack processing needs to be performed after handover to the target cell; or
   - a type of a protocol stack processing that needs to be performed after handover to the target cell;
   where the type of the protocol stack processing includes at least one of: PDCP re-establishment, PDCP data recovery, RLC re-establishment, MAC reset, MAC partial reset, or clearing of an SRB PDCP SDU.
   Execution granularity of the protocol stack processing is at least one of:
   - a single RB;
   - a single UE;
   - a single RB group;
   - a single SRB;
   - a single DRB;
   - a single AM DRB; or
   - a single UM DRB.
(4) The transmission status information of the current service includes at least one of:
   a PDCP SN, indicating a sequence number of a PDCP SDU;
   a PDCP HFN, indicating a hyper frame number of a PDCP SDU;
   a state variable RX_NEXT, indicating a next COUNT value expected to be received by a receiving side;
   a state variable RX_DELIV, indicating a COUNT value associated with a first PDCP SDU in a receive window that has not yet been delivered to upper layers; or
   a target MRB ID, indicating an MRB associated with an MBS.

The first behavior may be a behavior related to cell handover/change performed by the terminal. The first behavior includes at least one of:
(1) key update of a target cell;
(2) key update of a secondary node or a secondary cell group or a primary secondary cell;
(3) setting of an initial state variable RX_DELIV of a PDCP entity corresponding to a target multicast radio bearer to a state variable RX_DELIV indicated in the cell information; or
(4) layer 2 reset;
where the layer 2 reset includes at least one of: PDCP re-establishment, PDCP data recovery, RLC re-establishment, MAC reset, MAC partial reset or clearing of an SRB PDCP SDU.

For (1) key update of the target cell.

In a case where the cell information indicates that the current cell handover is the inter DU handover, the terminal performs key update of the target cell based on the cell information.

This step includes at least one or any one of:
- in a case where it is determined that a DU identifier corresponding to the source cell is different from a DU identifier corresponding to the target cell based on the cell information, the terminal performs key update of the target cell;
- in a case where it is determined that the source cell and the target cell belong to different cell groups based on the cell information, the terminal performs key update of the target cell; or
- in a case where the cell information indicates that key update is needed to be performed for handover from the source cell to the target cell, the terminal performs key update of the target cell.

For (2) key update of the secondary node or the secondary cell group or the primary secondary cell.

In a case where the cell information indicates that the current PScell change is the inter SN change, the terminal performs key update of the secondary node or the secondary cell group or the primary secondary cell based on the cell information.

This step includes at least one or any one of:
- in a case where it is determined that an SN identifier corresponding to the source PSCell is different from an SN identifier corresponding to the target PScell based on the cell information, the terminal performs key update of the secondary node or the secondary cell group or the primary and secondary cell;
- in a case where it is determined that the source PSCell and the target PScell belong to different cell groups based on the cell information, the terminal performs key update of the secondary node or the secondary cell group or the primary secondary cell;
- in a case where it is determined that the source PScell and the target PScell are associated with different sk_counters based on the cell information, the terminal performs key update of the secondary node or the secondary cell group or the primary secondary cell; or
- in a case where the cell information indicates that key update is needed to be performed for handover from the source PScell to the target PScell, the terminal performs key update of the secondary node or the secondary cell group or the primary secondary cell.

For (3) setting of the initial state variable RX_DELIV of the PDCP entity corresponding to the target multicast radio bearer to the state variable RX_DELIV indicated in the cell information.

In a case where the cell information includes the state variable RX_DELIV, the initial state variable RX_DELIV of the PDCP entity corresponding to the target multicast radio bearer is set to the state variable RX_DELIV indicated in the cell information; or
in a case where the cell information includes the state variable RX_DELIV and the target MRB ID, the initial state variable RX_DELIV of the PDCP entity corresponding to the target multicast radio bearer is set to the state variable RX_DELIV indicated in the cell information.

As another optional design idea, the cell information includes: multiple candidate cell configurations of a first candidate PScell, where each candidate cell configuration includes: a candidate cell index, a handover trigger condition and information for key update;
where handover trigger conditions in the multiple candidate cell configurations are the same, candidate cell indexes in different candidate cell configurations are different, and the information for key update includes: no need to update a key, or a sk_counter used for updating a key.

The specific implementation details of the indication method of cell information on the network device side refer to those of the indicating method of cell information on the terminal side, which will not be repeated here.

### Indicating cell information under a selective activation scenario of a cell group

The terminal 110 determines whether to update key information or whether to perform protocol stack processing, or determines whether the current cell change procedure is an inter-SN change or an intra-SN change, based on cell information. The cell information may be carried in a handover command, such as an SN change/addition command; or may be carried in candidate cell configuration information, such as selectively activated SN/SCG/PScell configuration information of the cell group.

The terminal 110 receives the cell information transmitted by the network device, where the cell information includes at least one of:
- cell deployment information;
   cell deployment information related to cell handover/change/addition;
- secondary node deployment information;
   secondary node/secondary cell group/primary secondary cell deployment information related to cell handover/change/addition;
- key update information;
   information related to whether key update needs to be performed after cell handover/change/addition;
- protocol stack processing information;
   information related to whether protocol stack processing needs to be performed and a protocol stack processing to be performed, after cell handover/change/addition; or
- transmission status information of a current service;
information related to how to set the transmission status information of the current service after cell handover/change/addition, where the current service may be a multicast service.
(1) Secondary node deployment information includes SN identifiers, and the terminal 110 determines the current cell change procedure based on the SN identifiers.
   Exemplarily, the secondary node deployment information carries the SN identifier of the SN to which each candidate PScell belongs or the SN identifier of the SN to which the target PScell belongs. Compared to the SN identifier of the source PScell, when the SN identifier is changed, the current cell change procedure is the inter-SN change; and when the SN identifier is not changed, the current cell change procedure is the intra- SN change.
(2) The candidate cells are configured in groups, the secondary node deployment information includes group identifiers, and each group is assigned one group identifier. The candidate cells in the same group belong to intra-SN, and the candidate cells in different groups belong to inter-SN.
   Exemplarily, the secondary node deployment information carries a cell group or cell group identifier corresponding to at least two candidate PScells belonging to the same SN. For example, the cell group identifier corresponding to candidate PScell1 and candidate PScell2 belonging to the first SN is the first cell group identifier, and the cell group identifier corresponding to candidate PScell3 and candidate PScell4 belonging to the second SN is the second cell group identifier.
(3) In a case where it is determined that the source PScell and the target PScell are associated with the same sk_counter based on the cell information, the key information is not updated; and in a case where it is determined that the source PScell and the target PScell are associated with different sk_counters based on the cell information, the key information is updated.
   Exemplarily, in a case where it is determined that the source PScell and the target PScell are associated with the same sk_counter1 based on the secondary node deployment information, the key information is not updated; and in a case where it is determined that the source PScell is associated with the sk_counter1 and the target PScell is associated with sk_counter2 based on the secondary node deployment information, the key information is updated.
(4) Upon each completion of handover by the UE, the network device updates the key information in the candidate cell configuration through the RRC/MAC CE/DCI, including whether to update the key information after each candidate cell serves as the target cell, which is indicated by means of explicit indication or bitmap.

Exemplarily, a single bit in the bitmap is used to indicate whether to update the key information, 0 represents not updating the key information, and 1 represents updating the key information. When the value of the bitmap is 011, the order of the candidate cells corresponding to the three bits is candidate cell 1, candidate cell 2 and candidate cell 3, then the key information of candidate cell 1 is not updated, while the key information of candidate cell 2 or candidate cell 3 is updated.

As another optional design idea, when the candidate cell satisfies the cell change condition, the terminal 110 sends a leave message to the source cell, and the network notifies the target cell in advance to prepare to dynamically update the security information.

As another optional design idea, the cell information includes: multiple candidate cell configurations of a first candidate PScell, where each candidate cell configuration includes: a candidate cell index, a handover trigger condition and information for key update;
where handover trigger conditions in the multiple candidate cell configurations are the same, candidate cell indexes in different candidate cell configurations are different, and the information for key update includes: no need to update a key, or a sk_counter used for updating a key.

With reference to FIG. 1, assuming that the current PScell is Cell 1, the first candidate PScell is Cell 3, and three groups of candidate cell configurations are configured for Cell 3, which are exemplarily shown in Table 2.

Here, since Cell 3 is configured with three groups of candidate cell configurations, the UE may equivalently regard Cell 3 as three candidate PScells: Cell 3-1, Cell 3-2 and Cell 3-3. However, these three candidate PScells are essentially one cell and correspond to the same PCI.

For the first candidate PScell, in a case where candidate cell configurations satisfying handover trigger conditions include at least two candidate cell configurations, a first candidate cell configuration is selected based on the at least two candidate cell configurations. For example, the handover trigger conditions corresponding to the above candidate cell indexes 3-1, 3-2 and 3-3 are all satisfied, and then, the first candidate cell configuration is selected from the three candidate cell configurations.

Here, the first candidate cell configuration is used for a key update procedure of the target PScell, and the target PScell is the first candidate PScell.

In some embodiments, the handover trigger conditions in the at least two candidate cell configurations are the same. That is, in order to prevent the UE from evaluating the handover trigger conditions for the multiple candidate cell configurations of the same candidate PScell simultaneously, the network device may associate the multiple candidate cell configurations of the same candidate PScell with one handover trigger condition, so as to avoid repeated evaluations.

In some embodiments, selecting the first candidate cell configuration based on the at least two candidate cell configurations includes the following.
(1) The first candidate cell configuration is randomly selected from the at least two candidate cell configurations.
   Exemplarily, the first candidate PScell is Cell 3, the Cell 3 is configured with three groups of candidate cell configurations, and the corresponding candidate cell indexes are 3-1, 3-2 and 3-3, respectively. The corresponding candidate cell configuration with the candidate cell index of 3-1 is randomly selected as the first candidate cell configuration.
(2) Candidate cell configurations with valid sk_counters are determined from the at least two candidate cell configurations, and a first-sorted candidate cell configuration in the candidate cell configurations with valid sk_counters is taken as the first candidate cell configuration.

Optionally, the candidate cell configurations with valid sk_counters are sorted in one of the following sorting ,manners:
- sorting in descending order according to the candidate cell indexes;
- sorting in ascending order according to the candidate cell indexes;
- sorting in descending order according to the sk_counters; or
- sorting in ascending order according to the sk_counters.

Exemplarily, the first candidate PScell is Cell 3, and Cell 3 is configured with two groups of candidate cell configurations with valid sk_counters: candidate cell configuration 1 and candidate cell configuration 2. The candidate cell index corresponding to candidate cell configuration 1 is 3-1, and the candidate cell index corresponding to candidate cell configuration 2 is 3-2, which are sorted in ascending order according to the candidate cell indexes, in which the candidate cell index 3-1 corresponding to candidate cell configuration 1 is sorted in first place, and thus the candidate cell configuration 1 is taken as the first candidate cell configuration.

(3) Candidate cell configurations with unused sk_counters are determined from the at least two candidate cell configurations, and a first-sorted candidate cell configuration in the candidate cell configurations with unused sk_counters is taken as the first candidate cell configuration.

Exemplarily, the first candidate PScell is Cell 3, and Cell 3 is configured with two groups of candidate cell configurations with unused sk_counters: candidate cell configuration 1 and candidate cell configuration 2. The candidate cell index corresponding to candidate cell configuration 1 is 3-1, and the candidate cell index corresponding to candidate cell configuration 2 is 3-2, which are sorted in ascending order according to the candidate cell indexes, in which the candidate cell index 3-1 corresponding to candidate cell configuration 1 is sorted in first plcae, and thus candidate cell configuration 1 is taken as the first candidate cell configuration.

In some embodiments, the terminal reports a candidate cell index in a selected candidate cell configuration to the MN.

Exemplarily, the terminal reports to the MN that the candidate cell index in the selected candidate cell configuration 1 is 3-1.

In some embodiments, in a case where a change from the source PScell to the target PScell is an inter SN change, a new key is derived based on a sk_counter in the first candidate cell configuration, and the sk_counter shall be invalidated or released; or
in a case where a change from the source PScell to the target PScell is an intra SN change, a sk_counter in the first candidate cell configuration is not applied to derive a new key, and the sk_counter is maintained to be valid.

Exemplarily, the source PScell belongs to the first SN, the target PScell belongs to the second SN, the sk_counter in the first candidate cell configuration is sk_counter1, the change from the source PScell to the target PScell belongs to the inter SN change, the new key is derived based on sk_counter1, and sk_counter1 shall be invalidated or released.

In some embodiments, in a case where the first candidate cell configuration and a second candidate cell configuration are both associated with a same sk_counter, and a change from the source PScell to the first PScell is an inter SN change, a new key is derived based on a sk_counter in the first candidate cell configuration, and the sk_counter shall be invalidated or released;
where the first candidate cell configuration and the second candidate cell configuration are applied to an intra SN PScell change only, in a subsequent PScell change procedure.

That is, for a certain candidate PScell, if the handover in which the UE switches from the source PScell to the candidate PScell is the inter-SN handover, the UE derives a new key according to the configuration, and considers that the sk_counter in the candidate cell configuration is invalided or releases the sk_counter in the configuration. If the handover in which the UE switches from the source PScell to the candidate PScell is the intra-SN handover, the UE does not apply the sk_counter in the candidate cell configuration and considers that the sk_counter is still valid. For a candidate cell in which the sk_counter in the candidate cell configuration is invalid or the sk_counter is not included in the candidate cell configuration, which is used for the intra-SN PScell change only; or the UE releases a candidate cell with used sk_counter; or it is considered that the candidate cell with used sk_counter is an invalid candidate configuration, and an evaluation on execution conditions of the cell is stopped.

Exemplarily, the first PScell includes the first candidate cell configuration and the second candidate cell configuration, the first candidate cell configuration is candidate cell configuration 1, the second candidate cell configuration is candidate cell configuration 2, both associated with sk_counter1. The source PScell belongs to the first SN, the first PScell belongs to the second SN, and the change from the source PScell to the first PScell belongs to the inter SN change. In this case, the new key is derived based on sk_counter1, and the sk_counter1 shall be invalidated or released.

In another implementation, if multiple candidate cells (or multiple candidate cell configurations of the same candidate PScell) are associated with the same sk_counter, when the UE switches from another SN to one of the multiple candidate cells associated with the same sk_counter, the UE derives a new key based on the sk_counter and considers that the sk_counter is invalid. The multiple candidate cells associated with the sk_counter are subsequently used only for intra-SN handover.

### Indicating cell information under a LTM scenario

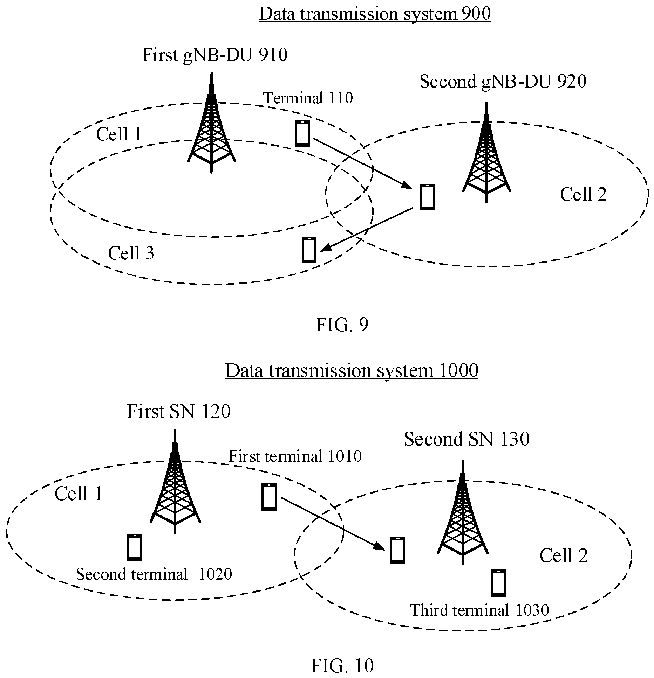

Under the LTM scenario, as illustrated in FIG. 9, a data transmission system 900 includes: a terminal 110, a first gNB-DU 910 and a second gNB-DU 920. The terminal 110 receives cell information, and measures and reports candidate cells. When the terminal 110 determines to perform cell handover, for example, when the terminal 110 receives a handover command (L1/L2 cell handover command), or when the terminal 110 perform handover on its own based on LTM candidate cell configuration information, the terminal 110 determines an L2 protocol stack processing manner.
(1) The cell information includes DU identifiers, and the UE determines that the current cell change procedure is an inter-DU change or an intra-DU change based on the DU identifiers.
   Exemplarily, the cell information carries the DU identifier of the DU to which each candidate cell belongs and/or the DU identifier of the DU to which the target cell belongs. Compared with the DU identifier of the source cell, when the DU identifier is changed, the current cell change procedure is the inter-DU change; and when the DU identifier is not changed the current cell change procedure is the intra-DU change.
(2) The candidate cells are configured in groups, the cell information includes group identifiers, and each group is assigned one group identifier. The candidate cells in the same group belong to intra-DU, and the candidate cells in different groups belong to inter-DU.
   Exemplarily, the cell information carries a cell group or cell group identifier corresponding to at least two candidate cells belonging to the same DU. For example, the cell group identifier corresponding to candidate cell1 and candidate cell2 belonging to the first DU is the first cell group identifier, and the cell group identifier corresponding to candidate cell3 and candidate cell4 belonging to the second DU is the second cell group identifier.
(3) The specific L2 protocol stack processing manner is explicitly indicated in the handover command, which is explicitly indicated by the DU identifier or group identifier or inter-DU/intra-DU indication information.

The L2 protocol stack processing manner includes at least one of:
- PDCPre-establishment;
- RLC re-establishment;
- PDCP data recovery;
- MAC reset;
- MAC partial reset;
- behaviors need to be performed for MAC partial reset; or
- clearing of PDCP SDUs of SRBs. Optionally, it is instructed to clear PDCP SDUs of all SRBs or PDCP SDUs of a part of SRBs, in which the part of SRBs include SRB1, SRB2 and SRB3.

The L2 protocol stack processing manner may be specified by the communication protocol or dynamically indicated, and the execution granularity includes at least one of:
a single RB;
a single UE;
a single RB group;
a single SRB;
a single DRB;
a single AM DRB; or
a single UM DRB.

Under the scenario where the network device instructs the terminal 110 to perform cell handover/change/addition, the cell information is used to indicate whether protocol stack processing needs to be performed after handover to the target cell, and/or the type of the protocol stack processing that needs to be performed after handover to the target cell. For example, after the network device instructs the terminal to switch from the source cell to the target cell, the cell information instructs to perform RLC re-establishment.

Under the scenario where the terminal performs cell handover/change/addition on its own, the cell information is used to indicate whether the protocol stack processing needs to be performed and/or the type of the protocol stack processing that needs to be performed, after the source cell is switched to each candidate cell. For example, the candidate cells include candidate cell 1 and candidate cell 2, the cell information indicates that protocol stack processing does not need to be performed when the source cell is switched to the candidate cell 1, and indicates that RLC re-establishment is performed after the source cell is switched to the candidate cell 2.

### Indicating cell information under an MBS scenario

Under the multicast service scenario, the network side serves a group of UEs. After one UE within the group performs cell handover, the multicast service will not be restarted due to the one UE within the group. Therefore, for the bearer associated with the multicast service, the UE needs to know current transmission status information of the target cell after the cell handover. As illustrated in FIG. 10, FIG. 10 illustrates: a first SN 120, a second SN 130, a first terminal 1010, a second terminal 1020 and a third terminal 1013.

The first terminal 1010 determines to perform cell handover. Before handover, the first terminal 1010 configures an MRB associated with an MBS. For each MRB associated with the MBS, the first terminal 1010 performs corresponding operations based on the cell information:
carrying the cell information in the handover command; or
carrying the cell information in new signaling, including RRC/MAC CE/DCI signaling; or
after the terminal switches from the source cell to the target cell, setting of initial transmission status information of a current service (e.g., MBS service) in the target cell to transmission status information of the current service.

In a case where the cell information includes a state variable RX_DELIV, an initial state variable RX_DELIV of the PDCP entity corresponding to the target multicast radio bearer is set to the state variable RX_DELIV indicated in the cell information; or
in a case where the cell information includes a state variable RX_DELIV and the target MRB ID, an initial state variable RX_DELIV of the PDCP entity corresponding to the target multicast radio bearer is set to the state variable RX_DELIV indicated in the cell information.

In some embodiments, in a case where the cell information does not include the state variable RX_DELIV, the initial state variable RX_DELIV of the PDCP entity corresponding to the target multicast radio bearer remains unchanged.

In some embodiments, in a case where the cell information includes a PDCP SN, an initial PDCP SN of the PDCP entity corresponding to the target multicast radio bearer is set to the PDCP SN indicated in the cell information; or
in a case where the cell information includes a PDCP SN and the MRB ID, an initial PDCP SN of the PDCP entity corresponding to the target multicast radio bearer is set to the PDCP SN indicated in the cell information; or
in a case where the cell information does not include a PDCP SN, an initial PDCP SN of the PDCP entity corresponding to the target multicast radio bearer remains unchanged.

In some embodiments, in a case where the cell information includes a PDCP HFN, an initial PDCP HFN of the PDCP entity corresponding to the target multicast radio bearer is set to the PDCP HFN indicated in the cell information; or
in a case where the cell information includes a PDCP HFN and the MRB ID, an initial PDCP HFN of the PDCP entity corresponding to the target multicast radio bearer is set to the PDCP HFN indicated in the cell information; or
in a case where the cell information does not include a PDCP HFN, an initial PDCP HFN of the PDCP entity corresponding to the target multicast radio bearer remains unchanged.

In some embodiments, in a case where the cell information includes a state variable RX_NEXT, an initial state variable RX_NEXT of the PDCP entity corresponding to the target multicast radio bearer is set to the state variable RX_NEXT indicated in the cell information; or
in a case where the cell information includes a state variable RX_NEXT and the MRB ID, an initial state variable RX_NEXT of the PDCP entity corresponding to the target multicast radio bearer is set to the state variable RX_NEXT indicated in the cell information; or
in a case where the cell information does not include a state variable RX_NEXT, an initial state variable RX_NEXT of the PDCP entity corresponding to the target multicast radio bearer remains unchanged.

To sum up, in the method provided in the present embodiment, the cell information is dynamically indicated by the method in which the terminal receives the cell information indicated by the network device and performs the first behavior based on the cell information, so that the terminal can continuously obtain the cell information, thereby performing protocol stack processing and key update.

In the method provided in the present embodiment, it is also determined whether to change the initial transmission status information of the target cell according to whether the cell information includes the transmission status information of the current service.

In the method provided in the present embodiment, by providing the multiple candidate cell configurations of the first candidate PScell, the first candidate cell configuration is selected when the handover trigger condition is met, so that the terminal avoids frequent reconfiguration or update of security information.

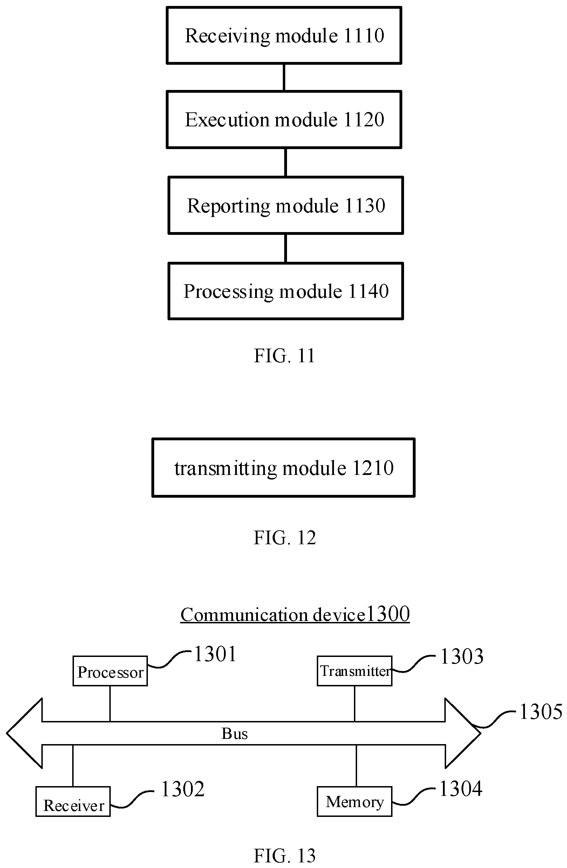

FIG. 11 illustrates a block diagram of an indication apparatus of cell information provided according to an exemplary embodiment of the present application, and the apparatus includes:
a receiving module 1110, configured to receive cell information indicated by a network device;
an execution module 1120, configured to perform a first behavior based on the cell information.

In a possible design of the present embodiment, the cell information includes at least one of:
cell deployment information;
secondary node deployment information;
key update information;
protocol stack processing information; or
transmission status information of a current service.

In a possible design of the present embodiment, the cell deployment information includes at least one of:
a source cell and a target cell belonging to a same DU or different DUs;
the source cell and a candidate cell belonging to a same DU or different DUs;
a DU to which the candidate cell belongs;
a DU to which the target cell belongs;
first indication information, indicating that a current cell handover is an intra DU handover;
second indication information, indicating that a current cell handover is an inter DU handover; or
a cell group or cell group identifier corresponding to at least two candidate cells belonging to a same DU.

In a possible design of the present embodiment, the secondary node deployment information includes at least one of:
a source PScell and a target PScell belonging to a same SN or different SNs;
the source PScell and a candidate PScell belonging to a same SN or different SNs;
an SN to which the candidate PScell belongs;
an SN to which the target PScell belongs;
third indication information, indicating that a current PScell change is an intra SN change;
fourth indication information, indicating that a current PScell change is an inter SN change;
a cell group or cell group identifier corresponding to at least two candidate PScells belonging to a same SN; or
secondary key counters (sk_counters) corresponding to at least two candidate PScells belonging to a same SN, where each secondary key counter is used to update a key after change to the target PScell.

In a possible design of the present embodiment, the protocol stack processing information includes at least one of:
whether protocol stack processing needs to be performed after handover to a target cell; or
a type of a protocol stack processing that needs to be performed after handover to the target cell;
where the type of the protocol stack processing includes at least one of: PDCP re-establishment, PDCP data recovery, RLC re-establishment, MAC reset, MAC partial reset, or clearing of SRB PDCP SDUs.

In a possible design of the present embodiment, execution granularity of the protocol stack processing is at least one of:
a single RB;
a single UE;
a single RB group;
a single SRB;
a single DRB;
a single AM DRB; or
a single UM DRB.

In a possible design of the present embodiment, the transmission status information of the current service includes at least one of:
a PDCP SN, indicating a sequence number of a PDCP SDU;
a PDCP HFN, indicating a hyper frame number of a PDCP SDU;
a state variable RX_NEXT, indicating a next COUNT value expected to be received by a receiving side;
a state variable RX_DELIV, indicating a COUNT value associated with a first PDCP SDU in a receive window that has not yet been delivered to upper layers; or
a target MRB ID, indicating an MRB associated with an MBS.

In a possible design of the present embodiment, the first behavior includes at least one of:
key update of a secondary node or a secondary cell group or a primary secondary cell;
layer 2 reset; or
setting of an initial state variable RX_DELIV of a PDCP entity corresponding to a target multicast radio bearer to a state variable RX_DELIV indicated in the cell information;
where the layer 2 reset includes at least one of: PDCP re-establishment, PDCP data recovery, RLC re-establishment, MAC reset, MAC partial reset or clearing of SRB PDCP SDUs.

In a possible design of the present embodiment, the execution module 1120 is configured to perform, in a case where the cell information indicates that a current PScell change is an inter SN change, key update of the secondary node or the secondary cell group or the primary secondary cell based on the cell information.

In a possible design of the present embodiment, the execution module 1120 is configured to: perform, in a case where it is determined that an SN identifier corresponding to a source PScell is different from an SN identifier corresponding to a target PScell based on the cell information, key update of the secondary node or the secondary cell group or the primary secondary cell; or
perform, in a case where it is determined that a source PScell and a target PScell belong to different cell groups based on the cell information, key update of the secondary node or the secondary cell group or the primary secondary cell; or
perform, in a case where it is determined that a source PScell and a target PScell are associated with different sk_counters based on the cell information, key update of the secondary node or the secondary cell group or the primary secondary cell; or
perform, in a case where the cell information indicates that key update is needed to be performed for handover from a source PScell to a target PScell, key update of the secondary node or the secondary cell group or the primary secondary cell.

In a possible design of the present embodiment, the execution module 1120 is configured to: set, in a case where the cell information includes the state variable RX_DELIV, the initial state variable RX_DELIV of the PDCP entity corresponding to the target multicast radio bearer to the state variable RX_DELIV indicated in the cell information; or
set, in a case where the cell information includes the state variable RX_DELIV and a target MRB ID, the initial state variable RX_DELIV of the PDCP entity corresponding to the target multicast radio bearer to the state variable RX_DELIV indicated in the cell information.

In a possible design of the present embodiment, the cell information includes:
multiple candidate cell configurations of a first candidate PScell, each candidate cell configuration including: a candidate cell index, a handover trigger condition and information for key update;
where candidate cell indexes in different candidate cell configurations are different, and the information for key update includes: no need to update a key, or a sk_counter used for updating a key.

In a possible design of the present embodiment, handover trigger conditions in the multiple candidate cell configurations are the same.

In a possible design of the present embodiment, for the first candidate PScell, the execution module 1120 is configured to select, in a case where candidate cell configurations satisfying handover trigger conditions include at least two candidate cell configurations, a first candidate cell configuration based on the at least two candidate cell configurations;
where the first candidate cell configuration is used for a key update process of a target PScell, and the target PScell is the first candidate PScell.

In a possible design of the present embodiment, the execution module 1120 is configured to: randomly select the first candidate cell configuration from the at least two candidate cell configurations; or
determine candidate cell configurations with valid sk_counters from the at least two candidate cell configurations, and take a first-sorted candidate cell configuration in the candidate cell configurations with valid sk_counters as the first candidate cell configuration; or
determine candidate cell configurations with unused sk_counters from the at least two candidate cell configurations, and take a first-sorted candidate cell configuration in the candidate cell configurations with unused sk_counters as the first candidate cell configuration.

In a possible design of the present embodiment, the candidate cell configurations with valid sk_counters are sorted in one of following sorting manners:
sorting in descending order according to the candidate cell indexes;
sorting in ascending order according to the candidate cell indexes;
sorting in descending order according to the sk_counters; or
sorting in ascending order according to the sk_counters.

In a possible design of the present embodiment, the indication apparatus of cell information further includes: a reporting module 1130, configured to report a candidate cell index in a selected candidate cell configuration.

In a possible design of the present embodiment, the execution module 1120 is configured to: derive, in a case where a change from a source PScell to a target PScell is an inter SN change, a new key based on a sk_counter in the first candidate cell configuration, and invalidate or release the sk_counter; or
fail to, in a case where a change from a source PScell to a target PScell is an intra SN change, apply a sk_counter in the first candidate cell configuration to derive a new key, and maintain the sk_counter valid.

In a possible design of the present embodiment, the indication apparatus of cell information further includes: a processing module 1140, configured to: apply candidate cell configurations with invalid sk_counters or requiring no key update to an intra SN PScell change only; or
release a candidate cell configuration with used sk_counter; or
stop an evaluation process of a handover trigger condition in a candidate cell configuration with used sk_counter.

In a possible design of the present embodiment, the execution module 1120 is configured to derive, in a case where the first candidate cell configuration and a second candidate cell configuration are both associated with a same sk_counter and a change from a source PScell to a first PScell is an inter SN change, a new key based on a sk_counter in the first candidate cell configuration, and invalidate or release the sk_counter;
where the first candidate cell configuration and the second candidate cell configuration are applied to an intra SN PScell change only, in a subsequent PScell change procedure.

In a possible design of the present embodiment, the cell information is carried in a first message, and the first message includes at least one of:
a handover command;
candidate cell configuration information;
an RRC message;
a MAC CE; or
DCI.

FIG. 12 illustrates a block diagram of an indication apparatus of cell information provided according to an exemplary embodiment of the present application, and the apparatus includes:
a transmitting module 1210, configured to indicate cell information to a terminal, where the cell information is used for assisting the terminal in performing a first behavior.

In a possible design of the present embodiment, the cell information includes at least one of:
cell deployment information;
secondary node deployment information;
key update information;
protocol stack processing information; or
transmission status information of a current service.

In a possible design of the present embodiment, the cell deployment information includes at least one of:
a source cell and a target cell belonging to a same DU or different DUs;
the source cell and a candidate cell belonging to a same DU or different DUs;
a DU to which the candidate cell belongs;
a DU to which the target cell belongs;
first indication information, indicating that a current cell handover is an intra DU handover;
second indication information, indicating that a current cell handover is an inter DU handover; or
a cell group or cell group identifier corresponding to at least two candidate cells belonging to a same DU.

In a possible design of the present embodiment, the secondary node deployment information includes at least one of:
a source PScell and a target PScell belonging to a same SN or different SNs;
the source PScell and a candidate PScell belonging to a same SN or different SNs;
an SN to which the candidate PScell belongs;
an SN to which the target PScell belongs;
third indication information, indicating that a current PScell change is an intra SN change;
fourth indication information, indicating that a current PScell change is an inter SN change;
a cell group or cell group identifier corresponding to at least two candidate PScells belonging to a same SN; or
secondary key counters (sk_counters) corresponding to at least two candidate PScells belonging to a same SN, where each secondary key counter is used to update a key after change to the target PScell.

In a possible design of the present embodiment, the protocol stack processing information includes at least one of:
whether protocol stack processing needs to be performed after handover to a target cell; or
a type of a protocol stack processing that needs to be performed after handover to the target cell;
where the type of the protocol stack processing includes at least one of: PDCP re-establishment, PDCP data recovery, RLC re-establishment, MAC reset, MAC partial reset, or clearing of SRB PDCP SDUs.

In a possible design of the present embodiment, execution granularity of the protocol stack processing is at least one of:
a single RB;
a single UE;
a single RB group;
a single SRB;
a single DRB;
a single AM DRB; or
a single UM DRB.

In a possible design of the present embodiment, the transmission status information of the current service includes at least one of:
a PDCP SN, indicating a sequence number of a PDCP SDU;
a PDCP HFN, indicating a hyper frame number of a PDCP SDU;
a state variable RX_NEXT, indicating a next COUNT value expected to be received by a receiving side;
a state variable RX_DELIV, indicating a COUNT value associated with a first PDCP SDU in a receive window that has not yet been delivered to upper layers; or
a target MRB ID, indicating an MRB associated with an MBS.

In a possible design of the present embodiment, the first behavior includes at least one of:
key update of a secondary node or a secondary cell group or a primary secondary cell;
layer 2 reset; or
setting of an initial state variable RX_DELIV of a PDCP entity corresponding to a target multicast radio bearer to a state variable RX_DELIV indicated in the cell information;
where the layer 2 reset includes at least one of: PDCP re-establishment, PDCP data recovery, RLC re-establishment, MAC reset, MAC partial reset or clearing of SRB PDCP SDUs.

In a possible design of the present embodiment, the cell information includes:
multiple candidate cell configurations of a first candidate PScell, each candidate cell configuration including: a candidate cell index, a handover trigger condition and information for key update;
where candidate cell indexes in different candidate cell configurations are different, and the information for key update includes: no need to update a key, or a sk_counter used for updating a key.

In a possible design of the present embodiment, handover trigger conditions in the multiple candidate cell configurations are the same.

FIG. 13 illustrates a structural schematic diagram of a communication device provided according to an exemplary embodiment of the present application. The communication device 1300 may be a terminal or a network device, and includes: a processor 1301, a receiver 1302, a transmitter 1303, a memory 1304 and a bus 1305.

The processor 1301 includes one or more processing cores, and the processor 1301 performs various functional applications and information processing by running software programs and modules.

The receiver 1302 and the transmitter 1303 may be implemented as a communication component, and the communication component may be a communication chip and may be called a transceiver.

The memory 1304 is connected to the processor 1301 via the bus 1305.

The memory 1304 may be configured to store at least one instruction, and the processor 1301 may be configured to execute the at least one instruction, to implement various steps in the above method embodiments.

In addition, the memory 1304 may be implemented by any type of volatile (transitory) or non-volatile (non-transitory) storage device or a combination thereof. The volatile or non-volatile storage device includes, but is not limited to, a magnetic disk or optical disk, an electrically-erasable programmable read only memory (EEPROM), an erasable programmable read only memory (EPROM), a static random access memory (SRAM), a Read-Only Memory (ROM), a magnetic memory, a flash memory, and a programmable read-only memory (PROM).

In a possible implementation, the transceiver in the terminal is configured to receive cell information indicated by the network device.

In a possible implementation, the processor in the terminal is configured to perform a first behavior based on the cell information.

In a possible implementation, the transceiver in the network device is configured to indicate the cell information to the terminal.

In the exemplary embodiments, a computer-readable storage medium is further provided. The computer-readable storage medium has at least one instruction, at least one program, a code set or instruction set stored therein, and the at least one instruction, at least one program, the code set or instruction set is loaded and executed by a processor, to implement the indication methods of cell information provided in the above various method embodiments.

In the exemplary embodiments, a computer program product is further provided. When the computer program product is executed on a processor of a computer device, the computer device is enabled to perform the indication methods of cell information provided in the above various method embodiments.

Those ordinary skilled in the art may understand that all or part of the steps to implement the above embodiments may be accomplished by hardware or by instructing related hardware through a program, and the program may be stored in a computer-readable storage medium, and the above-mentioned storage medium may be a read-only memory, a disk or an optical disk, or the like.

The foregoing is merely optional embodiments of the present application, and is not intended to limit the present application. Any modification, equivalent replacement, improvement, or the like made within the spirit and principles of the present application shall be included within the protection scope of the present application.

## Claims

1. An indication method of cell information, performed by a terminal and comprising:
receiving cell information indicated by a network device; and
performing a first behavior based on the cell information.

2. The method according to claim 1, wherein the cell information comprises at least one of:
cell deployment information;
secondary node deployment information;
key update information;
protocol stack processing information; or
transmission status information of a current service.

3. The method according to claim 2, wherein the cell deployment information comprises at least one of:
a source cell and a target cell belonging to a same distributed unit (DU) or different DUs;
the source cell and a candidate cell belonging to a same DU or different DUs;
a DU to which the candidate cell belongs;
a DU to which the target cell belongs;
first indication information, indicating that a current cell handover is an intra DU handover;
second indication information, indicating that a current cell handover is an inter DU handover; or
a cell group or cell group identifier corresponding to at least two candidate cells belonging to a same DU.

4. The method according to claim 2, wherein the secondary node deployment information comprises at least one of:
a source primary secondary cell (PScell) and a target PScell belonging to a same secondary node (SN) or different SNs;
the source PScell and a candidate PScell belonging to a same SN or different SNs;
an SN to which the candidate PScell belongs;
an SN to which the target PScell belongs;
third indication information, indicating that a current PScell change is an intra SN change;
fourth indication information, indicating that a current PScell change is an inter SN change;
a cell group or cell group identifier corresponding to at least two candidate PScells belonging to a same SN; or
secondary key counters (sk_counters) corresponding to at least two candidate PScells belonging to a same SN, wherein each secondary key counter is used to update a key after change to the target PScell.

5. The method according to claim 2, wherein the protocol stack processing information comprises at least one of:
whether protocol stack processing needs to be performed after handover to a target cell; or
a type of a protocol stack processing that needs to be performed after handover to the target cell;
wherein the type of the protocol stack processing comprises at least one of: packet data convergence protocol (PDCP) re-establishment, PDCP data recovery, radio link control (RLC) re-establishment, media access control (MAC) reset, MAC partial reset, or clearing of signalling radio bearer packet data convergence protocol service data units (SRB PDCP SDUs).

6. The method according to claim 5, wherein execution granularity of the protocol stack processing is at least one of:
a single radio bearer (RB);
a single terminal UE;
a single RB group;
a single signalling radio bearer (SRB);
a single data radio bearer (DRB);
a single acknowledgement mode DRB (AM DRB); or
a single un-acknowledgement mode DRB (UM DRB).

7. The method according to claim 2, wherein the transmission status information of the current service comprises at least one of:
a PDCP sequence number (PDCP SN), indicating a sequence number of a PDCP SDU;
a PDCP hyper frame number (PDCP HFN), indicating a hyper frame number of a PDCP SDU;
a state variable RX_NEXT, indicating a next count (COUNT) value expected to be received by a receiving side;
a state variable RX_DELIV, indicating a COUNT value associated with a first PDCP SDU in a receive window that has not yet been delivered to upper layers; or
a target multicast radio bearer identity document (MRB ID), indicating a multicast radio bearer (MRB) associated with a multimedia broadcast service (MBS).

8. The method according to any one of claims 1 to 7, wherein the first behavior comprises at least one of:
key update of a secondary node or a secondary cell group or a primary secondary cell;
layer 2 reset; or
setting of an initial state variable RX_DELIV of a PDCP entity corresponding to a target multicast radio bearer to a state variable RX_DELIV indicated in the cell information;
wherein the layer 2 reset comprises at least one of: PDCP re-establishment, PDCP data recovery, RLC re-establishment, MAC reset, MAC partial reset or clearing of SRB PDCP SDUs.

9. The method according to claim 8, wherein performing key update of the secondary node or the secondary cell group or the primary secondary cell based on the cell information comprises:
in a case where the cell information indicates that a current PScell change is an inter SN change, performing key update of the secondary node or the secondary cell group or the primary secondary cell based on the cell information.

10. The method according to claim 9, wherein in the case where the cell information indicates that the current PScell change is the inter SN change, performing key update of the secondary node or the secondary cell group or the primary secondary cell based on the cell information comprises:
in a case where it is determined that an SN identifier corresponding to a source PScell is different from an SN identifier corresponding to a target PScell based on the cell information, performing key update of the secondary node or the secondary cell group or the primary secondary cell; or
in a case where it is determined that a source PScell and a target PScell belong to different cell groups based on the cell information, performing key update of the secondary node or the secondary cell group or the primary secondary cell; or
in a case where it is determined that a source PScell and a target PScell are associated with different sk_counters based on the cell information, performing key update of the secondary node or the secondary cell group or the primary secondary cell; or
in a case where the cell information indicates that key update is needed to be performed for handover from a source PScell to a target PScell, performing key update of the secondary node or the secondary cell group or the primary secondary cell.

11. The method according to claim 8, wherein performing setting of the initial state variable RX_DELIV of the PDCP entity corresponding to the target multicast radio bearer to the state variable RX_DELIV indicated in the cell information based on the cell information comprises:
in a case where the cell information comprises the state variable RX_DELIV, setting the initial state variable RX_DELIV of the PDCP entity corresponding to the target multicast radio bearer to the state variable RX_DELIV indicated in the cell information; or
in a case where the cell information comprises the state variable RX_DELIV and a target MRB ID, setting the initial state variable RX_DELIV of the PDCP entity corresponding to the target multicast radio bearer to the state variable RX_DELIV indicated in the cell information.

12. The method according to claim 1, wherein the cell information comprises:
multiple candidate cell configurations of a first candidate PScell, each candidate cell configuration comprising: a candidate cell index, a handover trigger condition and information for key update;
wherein candidate cell indexes in different candidate cell configurations are different, and the information for key update comprises: no need to update a key, or a sk_counter used for updating a key.

13. The method according to claim 12, wherein handover trigger conditions in the multiple candidate cell configurations are the same.

14. The method according to claim 12, wherein performing the first behavior based on the cell information comprises:
for the first candidate PScell, in a case where candidate cell configurations satisfying handover trigger conditions include at least two candidate cell configurations, selecting a first candidate cell configuration based on the at least two candidate cell configurations;
wherein the first candidate cell configuration is used for a key update process of a target PScell, and the target PScell is the first candidate PScell.

15. The method according to claim 14, wherein selecting the first candidate cell configuration based on the at least two candidate cell configurations comprises:
randomly selecting the first candidate cell configuration from the at least two candidate cell configurations; or
determining candidate cell configurations with valid sk_counters from the at least two candidate cell configurations, and taking a first-sorted candidate cell configuration in the candidate cell configurations with valid sk_counters as the first candidate cell configuration; or
determining candidate cell configurations with unused sk_counters from the at least two candidate cell configurations, and taking a first-sorted candidate cell configuration in the candidate cell configurations with unused sk_counters as the first candidate cell configuration.

16. The method according to claim 15, wherein the candidate cell configurations with valid sk_counters are sorted in one of following sorting manners:
sorting in descending order according to the candidate cell indexes;
sorting in ascending order according to the candidate cell indexes;
sorting in descending order according to the sk_counters; or
sorting in ascending order according to the sk_counters.

17. The method according to claim 14, further comprising:
reporting a candidate cell index in a selected candidate cell configuration.

18. The method according to claim 14, further comprising:
in a case where a change from a source PScell to a target PScell is an inter SN change, deriving a new key based on a sk_counter in the first candidate cell configuration, and invalidating or releasing the sk_counter; or
in a case where a change from a source PScell to a target PScell is an intra SN change, failing to apply a sk_counter in the first candidate cell configuration to derive a new key, and maintaining the sk_counter valid.

19. The method according to claim 12, wherein in a subsequent PScell change procedure, the method further comprises:
applying a candidate cell configuration with invalid sk_counter or requiring no key update to an intra SN PScell change only; or
releasing a candidate cell configuration with used sk_counter; or
stopping an evaluation process of a handover trigger condition in a candidate cell configuration with used sk_counter.

20. The method according to claim 14, further comprising:
in a case where the first candidate cell configuration and a second candidate cell configuration are both associated with a same sk_counter and a change from a source PScell to a first PScell is an inter SN change, deriving a new key based on a sk_counter in the first candidate cell configuration, and invalidating or releasing the sk_counter;
wherein the first candidate cell configuration and the second candidate cell configuration are applied to an intra SN PScell change only, in a subsequent PScell change procedure.

21. The method according to any one of claims 1 to 20, wherein the cell information is carried in a first message, and the first message comprises at least one of:
a handover command;
candidate cell configuration information;
a radio resource control (RRC) message;
a MAC control unit (MAC CE); or
downlink control information (DCI).

22. An indication method of cell information, performed by a network device and comprising:
indicating cell information to a terminal, wherein the cell information is used for assisting the terminal in performing a first behavior.

23. The method according to claim 22, wherein the cell information comprises at least one of:
cell deployment information;
secondary node deployment information;
key update information;
protocol stack processing information; or
transmission status information of a current service.

24. The method according to claim 23, wherein the cell deployment information comprises at least one of:
a source cell and a target cell belonging to a same DU or different DUs;
the source cell and a candidate cell belonging to a same DU or different DUs;
a DU to which the candidate cell belongs;
a DU to which the target cell belongs;
first indication information, indicating that a current cell handover is an intra DU handover;
second indication information, indicating that a current cell handover is an inter DU handover; or
a cell group or cell group identifier corresponding to at least two candidate cells belonging to a same DU.

25. The method according to claim 23, wherein the secondary node deployment information comprises at least one of:
a source PScell and a target PScell belonging to a same SN or different SNs;
the source PScell and a candidate PScell belonging to a same SN or different SNs;
an SN to which the candidate PScell belongs;
an SN to which the target PScell belongs;
third indication information, indicating that a current PScell change is an intra SN change;
fourth indication information, indicating that a current PScell change is an inter SN change;
a cell group or cell group identifier corresponding to at least two candidate PScells belonging to a same SN; or
secondary key counters (sk_counters) corresponding to at least two candidate PScells belonging to a same SN, wherein each secondary key counter is used to update a key after change to the target PScell.

26. The method according to claim 23, wherein the protocol stack processing information comprises at least one of:
whether protocol stack processing needs to be performed after handover to a target cell; or
a type of a protocol stack processing that needs to be performed after handover to the target cell;
wherein the type of the protocol stack processing comprises at least one of: PDCP re-establishment, PDCP data recovery, RLC re-establishment, MAC reset, MAC partial reset, or clearing of SRB PDCP SDUs.

27. The method according to claim 26, wherein execution granularity of the protocol stack processing is at least one of:
a single RB;
a single UE;
a single RB group;
a single SRB;
a single DRB;
a single AM DRB; or
a single UM DRB.

28. The method according to claim 23, wherein the transmission status information of the current service comprises at least one of:
a PDCP SN, indicating a sequence number of a PDCP SDU;
a PDCP HFN, indicating a hyper frame number of a PDCP SDU;
a state variable RX_NEXT, indicating a next COUNT value expected to be received by a receiving side;
a state variable RX_DELIV, indicating a COUNT value associated with a first PDCP SDU in a receive window that has not yet been delivered to upper layers; or
a target MRB ID, indicating an MRB associated with an MBS.

29. The method according to any one of claims 22 to 28, wherein the first behavior comprises at least one of:
key update of a secondary node or a secondary cell group or a primary secondary cell;
layer 2 reset; or
setting of an initial state variable RX_DELIV of a PDCP entity corresponding to a target multicast radio bearer to a state variable RX_DELIV indicated in the cell information;
wherein the layer 2 reset comprises at least one of: PDCP re-establishment, PDCP data recovery, RLC re-establishment, MAC reset, MAC partial reset or clearing of SRB PDCP SDUs.

30. The method according to claim 22, wherein the cell information comprises:
multiple candidate cell configurations of a first candidate PScell, each candidate cell configuration comprising: a candidate cell index, a handover trigger condition and information for key update;
wherein candidate cell indexes in different candidate cell configurations are different, and the information for key update comprises: no need to update a key, or a sk_counter used for updating a key.

31. The method according to claim 30, wherein handover trigger conditions in the multiple candidate cell configurations are the same.

32. An indication apparatus of cell information, comprising:
a receiving module, configured to receive cell information indicated by a network device; and
an execution module, configured to perform a first behavior based on the cell information.

33. An indication apparatus of cell information, comprising:
a transmitting module, configured to indicate cell information to a terminal, wherein the cell information is used for assisting the terminal in performing a first behavior.

34. A communication device, comprising:
a processor;
a transceiver connected to the processor; and
a memory configured to store executable instructions of the processor;
wherein the processor is configured to load and execute the executable instructions, to enable the communication device to implement the indication method of cell information according to any one of claims 1 to 31.

35. A computer-readable storage medium, wherein the computer-readable storage medium has a computer program stored therein, and the computer program is loaded and executed by a processor to enable a communication device to implement the indication method of cell information according to any one of claims 1 to 31.

36. A computer program product, comprising computer instructions, wherein the computer instructions are stored in a computer-readable storage medium, a processor obtains the computer instructions from the computer-readable storage medium, loads and executes the computer instructions, to enable the communication device to implement the indication method of cell information according to any one of claims 1 to 31.

37. A computer program, comprising computer program instructions, wherein the computer program instructions are stored in a computer-readable storage medium, a processor obtains the computer instructions from the computer-readable storage medium, loads and executes the computer instructions, to enable the communication device to implement the indication method of cell information according to any one of claims 1 to 31.
